# EUROPÄISCHE PATENTSCHRIFT

(11) **EP 2 153 982 B1**
(45) Veröffentlichungstag und Bekanntmachung des Hinweises auf die Patenterteilung: **11.05.2011**
(21) Anmeldenummer: 08405190.3
(22) Anmeldetag: 30.07.2008
(51) Int. Cl.: B32B 3/18, B32B 3/30, B32B 5/18

(54) **Geschäumte Kunststoffplatte**
Foamed plastic board
Plaque en matière synthétique expansée

(43) Veröffentlichungstag der Anmeldung: 17.02.2010
(73) Patentinhaber: 3A Technology & Management AG, 8212 Neuhausen am Rheinfall (CH)
(72) Erfinder: Wolf, Thomas, 6204 Sempach (CH); Moritz, Pieper, 8803 Rüschlikon (CH)

(56) Entgegenhaltungen:
- EP-A- 1 393 892
- EP-B- 1 536 944

## Beschreibung

Vorliegende Erfindung betrifft ein flächenförmiges Strukturelement, als Abschnitt aus einem Schaumstoffblock, wobei der Schaumstoffblock aus einem geschäumten Kunststoff, enthaltend eine Mehrzahl von gestapelten Schaumstoffkörpern und/oder Schaumstoffkörpern aus durch in einer Ebene nebeneinander angeordneten und miteinander zu Schaumstoffkörpern verbundenen Körpersegmenten, die an ihren anstossenden Flächen flächige Schweissnähte aufweisen, und die Schaumstoffkörper an ihren anstossenden Flächen unter Ausbildung flächiger Schweissnähte gegenseitig zum Schaumstoffblock verschweisst sind, sowie ein Verfahren zur Herstellung eines solchen flächenförmigen Strukturelementes und die Verwendung desselben.

Es ist bekannt, Platten aus einem geschäumten thermoplastischen Kunststoff als Kernschichten in Sandwich-Verbunden oder Verbundbauteilen einzusetzen. Die Herstellung von geschäumten Kunststoffplatten kann beispielsweise mittels eines Extrusionsverfahrens erfolgen. Die strukturelle Belastbarkeit, beispielsweise die Druckfestigkeit rechtwinklig zur Extrusionsrichtung, von mittels Extrusionsverfahren hergestellter Kemschichten, kann nicht in allen Fällen den gestellten Anforderungen genügen. Verbundbauteile mit den genannten Kernschichten vermögen daher als Strukturbauteile für anspruchsvolle Anwendungen oftmals nicht allen Anforderungen zu genügen.

Für anspruchsvolle Anwendungen, wie z.B. Strukturbauteile im Transportwesen, sind jedoch Sandwich-Verbunde erforderlich, welche über ein hohes Mass an Festigkeit, insbesondere an Druckfestigkeit und Steifigkeit verfügen, und deren Kernmaterialien hohe Schubfestigkeit und -Steifigkeit aufweisen. Um diese Eigenschaften zu erreichen, werden beispielsweise stärkere und vielfach dickere Deckschichten verwendet. Dies führt in der Regel zu einer unerwünschten Erhöhung des spezifischen Gewichts der Sandwich-Verbunde. Zudem kann die Druckfestigkeit solcher Sandwich-Verbunde durch den Einsatz dickerer Deckschichten nicht beliebig erhöht werden.

Es ist daher wünschenswert, dass nicht nur die Deckschichten sondern auch die Kernschichten eine erhöhte Druck- und Schubfestigkeit und -Steifigkeit aufweisen, ohne jedoch den Vorteil der geringen Dichte von Schaumstoffkörpern aufgeben zu müssen.

Diese Massnahme würde einerseits die Herstellung von Sandwich-Verbunden mit verbesserten Festigkeits- und Steifigkeitseigenschaften ohne nennenswerte Erhöhung des spezifischen Gewichts erlauben. Andererseits würde der Einsatz von Kernschichten mit erhöhter Steifigkeit und Festigkeit auch der Einsatz von dünneren Deckschichten erlauben.

So sind geschäumte Kunststoffplatten bekannt, welche durch spezifische Ausgestaltung der Kernschicht eine verbesserte Festigkeit aufweisen.

Die EP 1 536 944 beschreibt beispielsweise die flächenförmige Strukturelemente aus geschäumten thermoplastischen Kunststoffen, wobei aus einer Mehrzahl von Körpersegmenten durch Schweissen flächige Strukturelemente erzeugt und die Strukturelemente unter Verschweissen der sich berührenden Seitenflächen zu Blöcken gestapelt werden. Die flächigen Schweissnähte bilden eine porenarme oder porenfreie Kunststoffzwischenschicht zwischen den Körpersegmenten und den Strukturelementen. Die quer zu den Schweissnähten vom Block abgetrennten Strukturelemente weisen eine in der Draufsicht netzartige, versteifende Stegstruktur, welche durch die Schweissnähte gebildet ist, auf. Die Strukturelemente können den Kern oder die Zwischenschicht eines Sandwichverbundes, eines Mehrlagenverbundes oder eines Formkörpers bilden.

Bei der Herstellung von beispielsweise Sandwich-Verbundelementen wird der Kern ein- oder beidseitig mit Deckschichten belegt und die Deckschichten mit dem Kern verbunden. Zur trennfesten Verbindung von Deckschicht und Kern wird ein Klebstoff zwischen deren einander zugewandten Oberflächen angeordnet. Werden Verbundbauteile hergestellt, wird z.B. ein Kern aus Kernmaterial in eine Hohlform eingelegt, fallweise werden Verstärkungsmaterialien, wie z.B. Fasern, z.B. in Form von Matten, Gewirken, Gespinsten, Geweben usw. aus Glas, Kohlenstoff, Polymeren, natürlichen Fasern etc., zwischen Form und Kern angeordnet. Der vorgesehene Zwischenraum zwischen Kern und Form wird mit einem Harz, wie einem Polyesterharz, einem Epoxyharz, einem Vinylesterharz etc., ausgegossen, wobei das Harz und gegebenenfalls das Verstärkungsmaterial, die den Kern ganz oder teilweise umhüllende Deckschicht ausbilden. Insbesondere wird zur Bildung der Deckschicht der Kern und fallweise die Verstärkungsmaterialien in eine evakuierbare Hohlform eingelegt, ein Vakuum angelegt und das Harz eingespritzt. Um das Gesamtgewicht des Verbundbauteils einerseits niedrig zu halten, anderseits eine hohe Stabilität des Verbundbauteils zu erhalten, müssen die Harzmengen kontrolliert angewendet werden. Vorteilhaft ist es, die Spaltmasse zwischen der Hohlform und dem Kern und damit die Dicke der Deckschicht, möglichst gering zu halten. Geringe Spaltmasse erschweren wiederum die Harzverteilung, insbesondere bei grossflächigen Verbundbauteilen, während des Einspritz- oder Injektionsverfahrens.

Aufgabe vorliegender Erfindung ist es, ein flächenförmiges, insbesondere plattenartiges, Strukturelement, geeignet als Kernmaterial und für Kernschichten sowie zur Erzeugung von Kernen von Sandwich-Verbundelementen oder Verbundbauteilen vorzuschlagen. Das flächenförmige Strukturelement soll einen Schaumstoff mit einer geschlossenzelligen Struktur enthalten und dennoch als Kern eine günstige Harzverteilung in der Hohlform ermöglichen. Ferner umfasst die Aufgabenstellung, ein kostengünstiges Verfahren zur Herstellung des genannten flächenförmigen Strukturelementes. Das flächenförmige Strukturelement soll ferner möglichst sortenrein sein.

Erfindungsgemäss wird die Aufgabe dadurch gelöst, dass die Schweissnähte von in Abstand zueinander stehenden Ausnehmungen unterbrochen sind.

Bevorzugt sind die Schweissnähte zwischen den Schaumstoffkörpern von in Abstand zueinander stehenden Ausnehmungen unterbrochen.

Das flächenförmige Strukturelement ist bevorzugt vollständig aus Kunststoff. Die Schaumstoffkörper sind beispielsweise plattenförmige Formkörper, hergestellt in einem Stück mittels eines Extrusionsschäumverfahrens, oder erzeugt aus mehreren aus extrusionsgeschäumten und gegenseitig, unter Ausbildung flächiger Schweissnähte, verschweissten Körpersegmenten. Die Schaumstoffkörper können gestapelt und an den Berührungsflächen, resp. an deren gegenseitig anstossenden Seitenflächen, unter Ausbildung flächiger Schweissnähte, gegenseitig verschweisst werden. Die flächigen Schweissnähte zwischen den Schaumstoffkörpern bilden eine porenarme oder porenfreie Kunststoffzwischenschicht in Form einer in Draufsicht versteifend wirkenden Stegstruktur aus. Die flächigen Schweissnähte zwischen den Körpersegmenten und den Schaumstoffkörpern bilden eine porenarme oder porenfreie Kunststoffzwischenschicht in Form einer in Draufsicht versteifend wirkenden Steg- oder Netzstruktur aus.

Das flächenförmige Strukturelement ist beispielhaft plattenförmig, vorzugsweise als Plattenelement, insbesondere als quaderförmiges Plattenelement, fallweise als Formkörper unregelmässiger äusserer Gestalt, ausgebildet.

Die Schaumstoffkörper, resp. die Körpersegmente, im flächenförmigen Strukturelement können mittels Extrusion hergestellt sein und die Schweissnahtflächen sowie die Ausnehmungen liegen insbesondere in Extrusionsrichtung der Schaumstoffkörper.

Das erfindungsgemässe flächenförmige Strukturelement besteht aus oder enthält zweckmässig thermoplastische Kunststoffe. Die thermoplastischen Kunststoffe sind vorzugsweise Polystyrol (PS), Acrylnitril/Butadien/Styrol-Pfropfcopolymer (ABS), Polyethylen (PE), Polypropylen (PP), Polyvinylchlorid (PVC), Polycarbonat (PC) und insbesondere Polyethylenterephthalat (PET), Polybutylenterephthalat, Polyphenylenether (PPE) bzw. Polyblends davon, wie Poly(phenylenether)-Polystyrol-Polyblend (PPE+PS), Polyetherimide oder Styrol/Acrylnitril-Copolymer (SAN).

Das erfindungsgemässe Strukturelement ist vorzugsweise sortenrein, d.h. es besteht vorzugsweise aus einem einzigen Kunststoff. Die Sortenreinheit kann bei einer Rezyklierung vorteilhaft sein. Da die Schweissnähte aus dem jeweiligen thermoplastischen Kunststoff gebildet sind, kann eine Anwendung von Klebstoffen, insbesondere Klebstoffe anderer chemischer Natur, als der geschäumte Kunststoff, zum Verbinden der Körpersegmente und Schaumstoffkörper, vermieden werden.

Das spezifische Gewicht eines erfindungsgemässen Strukturelementes beträgt beispielsweise mehr als 20 kg/m³, vorzugsweise mehr als 40 kg/m³ und insbesondere mehr als 50 kg/m³ und beispielsweise weniger als 500 kg/m³ und vorzugsweise weniger als 350 kg/m³. Spezifische Gewichte von erfindungsgemässen Strukturelementen betragen in bevorzugter Weise zwischen 50 kg/m³ und 320 kg/m³ Die Porengrösse der Schäume liegt z.B. im Bereich von 100 bis 1000 µm. Die Schäume sind insbesondere geschlossenzellige Schäume, d.h. weisen vorwiegend oder ausschliesslich geschlossene Poren auf. Die Offenzelligkeit nach ASTM D1056 kann beispielsweise kleiner als 10 %, insbesondere kleiner als 4%, sein.

Die Schweissnähte werden vorzugsweise durch geschmolzenen und nach dem Fügevorgang wieder erhärteten thermoplastischen Kunststoff der Körpersegmente, resp. Schaumstoffkörper, gebildet. Die Körpersegmente, resp. Schaumstoffkörper, weisen hierbei insbesondere an den gefügten Seitenflächen flächige Schmelz- und Wiedererhärtungszonen auf.

Im flächenförmigen Strukturelement ist die Dicke der Schweissnähte und/oder die Wandstärke der Ausnehmungen vorteilhaft derart festgelegt ist, dass die Stegstruktur oder Netzstruktur der Schweissnähte und/oder die Wandungen der Ausnehmungen die Festigkeit des Strukturelementes, z.B. bezüglich Flächendrücke, der Schub- und Biegebeanspruchung sowie der Schubbruchdehnung, verbessert. Dies bedeutet, dass die Schweissnähte nicht nur Fügestellen zwischen zwei Körpersegmenten darstellen, sondern zugleich auch Versteifungs- bzw. Verstärkungsstege zwischen zwei Körpersegmenten aus Schaumstoff sein können. Ferner bewirken die Schweissnähte auch eine Versteifung des flächenförmigen Strukturelementes bezüglich Schub- und Biegebeanspruchung und eine verbesserte Schubbruchdehnung. Die Auslegung der Stärke, bzw. Dicke der Schweissnähte erfolgt deshalb nicht nur hinsichtlich dem Kriterium einer stabilen Verbindungsnaht sondern auch hinsichtlich dem Kriterium einer wirksamen Versteifungs- bzw. Verstärkungsstruktur.

Die Dicke der Schmelz- und Wiedererhärtungszone der Seitenwandflächen, welche die Schweissnähte ausbilden, ist daher derart gewählt, dass das flächenförmige Strukturelement insbesondere eine hohe Druckfestigkeit bezüglich Flächendrücke und erhöhte Schubbruchdehnung aufweist.

Die Körpersegmente, resp. Schaumstoffkörper, sind vorzugsweise lückenlos, d.h. ohne Lunkerbildung, aneinander gefügt und verschweisst. Die Körpersegmente weisen daher bevorzugt einen Formquerschnitt auf, welcher ein lückenloses Aneinanderfügen der Körpersegmente ermöglicht.

Die Körpersegmente, resp. Schaumstoffkörper, können in einer nicht beanspruchten Ausführung auch unter Verwendung eines Klebers zu einem flächenförmigen Strukturelement aneinander gefügt bzw. aneinander geklebt sein.

In den flächenförmigen Strukturelementen können die einzelnen Körpersegmente und die einzelnen Schaumstoffkörper, in der Draufsicht auf das flächenförmige Strukturelement eine polygonale Form, zweckmässig eine acht-, sechs-, oder dreieckige Form, vorzugsweise eine viereckige Form und insbesondere eine rechteckige oder quadratische Form aufweisen. D.h. die Körpersegmente, resp. die Schaumstoffkörper, können in Draufsicht auf ein Strukturelement z.B. einen quadratischen, rechteckigen, hexagonalen oder dreieckigen usw. Umriss, welcher die so genannten Deckflächen der Körpersegmente, resp. der Schaumstoffkörper, umreisst, aufweisen.

Die Grösse der Körpersegmente und der Schaumstoffkörper kann je nach der zu erreichenden Steifigkeit bzw. Druckfestigkeit des Strukturelementes variieren.

Da jede der vorgenannten Geometrien sowie Grössen der Körpersegmente und der Schaumstoffkörper zu flächenförmigen Strukturelementen mit unterschiedlichen Eigenschaften führt, wird die Geometrie und Grösse der Körpersegmente primär aufgrund der spezifischen Anforderungen an das Strukturelement bestimmt.

Die Körpersegmente liegen beispielsweise in Form von Würfeln oder Quadern, insbesondere in Form von Strängen quadratischen oder quaderförmigen Querschnittes, vor. Körpersegmente in Form von Strängen quadratischen oder quaderförmigen Querschnittes können z.B. einlagig nebeneinander liegend angeordnet und flächig verschweisst werden, wobei die längsförmigen Schweissverbindungen eine Stegstruktur ausbilden und derart die Schaumkörper geformt werden. Schaumkörper können gestapelt angeordnet flächig miteinander verschweisst werden, wobei quer liegende Schweissverbindung eine Stegstruktur ausbildet. Durch das Verschweissen bildet sich ein Schaumstoffblock mit stegförmigen Schweissverbindungen z.B. mit Netzstruktur mit sich kreuzenden Schweissnähten. Sind die Körpersegmente in zwei übereinander liegenden Schaumkörpern zueinander versetzt angeordnet, bilden die Schweissverbindungen durchgehende Querschweissnähte und zueinander versetzte Längsschweissnähte in der Art einer Ziegelsteinmauer aus.

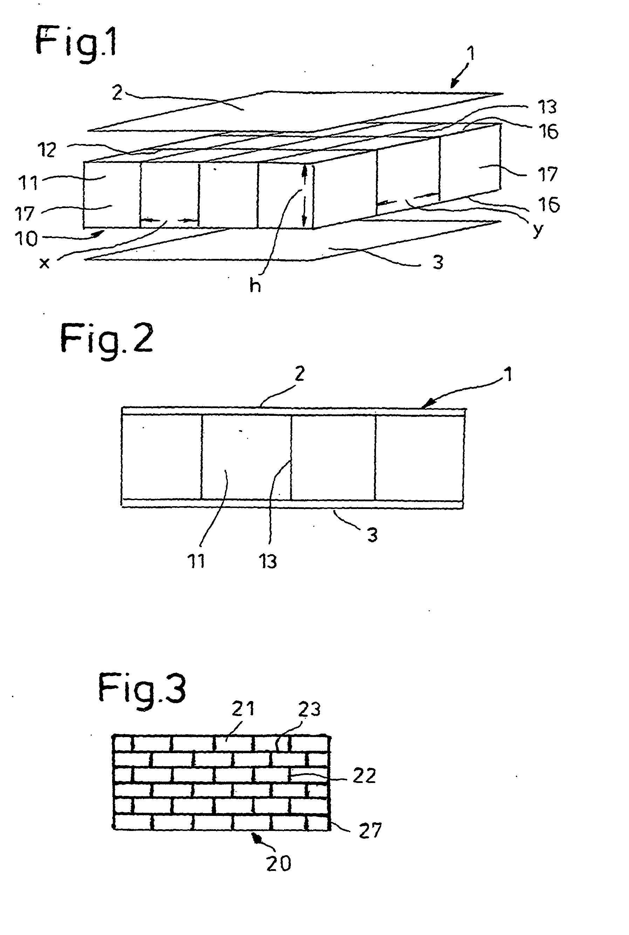

In Quaderform vorliegende Körpersegmente können z.B. (in Draufsicht auf das Strukturelement) einen quadratischen oder rechteckigen Querschnitt mit Seitenlänge (x) von 20 bis 400 mm, vorzugsweise von 30 bis 300 mm, insbesondere von 50 bis 150 mm, einer Breite (y) von 20 bis 2000 mm, vorzugsweise von 30 bis 1000 mm, insbesondere von 50 bis 800 mm. Ein rechteckförmiger Schaumstoffkörper kann beispielsweise aus zwei oder mehreren Körpersegmenten gefertigt sein. Da das Schweissen in beiden Richtungen an sich beliebig fortgeführt werden kann, können fast beliebig breite Schaumstoffblöcke gefertigt werden. Eine Seitenkantenlänge in x-Richtung von 20 bis 400 mm und in y-Richtung von 40 bis 2000 mm erscheinen sinnvoll (in Draufsicht auf das Strukturelement, siehe auch Figur 1). Die Höhe h liegt in der Extrusionsrichtung. Entsprechend ist diese unkritisch, da es sich in der Regel um einen kontinuierlichen Vorgang handelt. Die extrudierten Körpersegmente, resp. fallweise direkt extrudierten Schaumstoffkörper, werden in der Regel auf 30 mm bis 2000 mm, zweckmässig von 100 bis 1800 mm und insbesondere auf 400 bis 1200 mm, abgelängt. Somit entstehen Schaumstoffblöcke mit Kantenlängen von beispielsweise bis zu 2000 mm.

Die einzelnen Körpersegmente können, in Draufsicht auf ein flächenförmiges Strukturelement, ferner auch einen kurvenförmigen, z.B. einen konkaven oder konvexen, Umriss oder Umrissabschnitte aufweisen. Die Körpersegmente können auch verbundsteinartig ausgebildet sein, d.h. die Körpersegmente sind derart geformt, dass sich die einzelnen Körpersegmente fest ineinander fügen. Die Körpersegmente einer erfindungsgemässen Strukturelementes sind ferner bevorzugt zueinander kongruent. Die Seitenflächen der Körpersegmente liegen überdies bei plattenförmigen Strukturelementen bevorzugt senkrecht zu den Deckflächen.

Die aus den gegenseitig verschweissten Körpersegmenten gebildeten Schaumstoffkörper können gestapelt und die sich berührenden Seitenflächen dieser Schaumstoffkörper gegenseitig flächig verschweisst werden. Es wird dadurch ein Schaumstoffblock nach einer ersten Ausführungsweise gebildet. Nach einer zweiten Ausführungsweise können die Schaumstoffkörper auch als solche, einstückig, direkt z.B. durch Extrusionsschäumen, erzeugt werden. Es fehlen dann die Schweissnähte durch die Länge des Schaumstoffkörpers. Die Schaumstoffkörper können gestapelt und die sich berührenden Seitenflächen dieser Schaumstoffkörper flächig gegenseitig verschweisst werden. Es wird auch hier ein Schaumstoffblock gebildet. Es ist auch möglich, beliebig wechselweise beide Arten von Schaumstoffkörpern zu stapeln und zu Schaumstoffblöcken zu verschweissen.

Im flächenförmigen Strukturelement können die mittels Extrusionsverfahren hergestellten Schaumstoffkörper oder Körpersegmente und die Schweissnahtflächen in Extrusionsrichtung der Schaumstoffkörper angeordnet sein und die Ausnehmungen können in einem Winkel von 0° oder grösser und zweckmässig von 0 bis 90° zur Extrusionsrichtung liegen. Der Winkel kann beispielsweise 0° - 90°, bezüglich einer Achse parallel zur Längsseite und in Extrusionsrichtung laufend, des Schaumstoffkörpers, resp. eines Körpersegmentes, betragen. Sind die Ausnehmungen nicht in Extrusionsrichtung und parallel zur Längsseite angeordnet, so sind die Ausnehmungen zweckmässig in einem Winkel von etwa 1 ° - 60°, vorteilhaft von 15° - 60°, insbesondere von 30° - 45° und ganz besonders bevorzugt von 45°, angeordnet.

Die Erfindung betrifft im weiteren ein Verfahren zur Herstellung eines flächenförmigen Strukturelementes, enthaltend eine Mehrzahl von in einer Ebene nebeneinander angeordneten und miteinander verbundenen Körpersegmenten aus einem geschäumten Kunststoff.

Das erfindungsgemässe Verfahren zur Herstellung eines flächenförmigen Strukturelementes (10), enthaltend eine Mehrzahl von gestapelten Schaumstoffkörpern (7) und/oder Schaumstoffkörpern (7) aus in einer Ebene nebeneinander angeordneten und miteinander verbundenen Körpersegmenten (11) aus einem geschäumten Kunststoff, wobei das Strukturelement (10) vollständig aus Kunststoff ist und die Körpersegmente (11) an ihren anstossenden Flächen, unter Ausbildung flächiger

Schweissnähte (12, 13), gegenseitig verschweisst sind, ausgeführt durch die folgenden Schritte:
a. Herstellung von geschlossenzelligen Schaumstoffkörpern (7) durch einen Extrusions- und Schäumprozess oder Herstellung von Körpersegmenten (11) durch einen Extrusions- und Schäumprozess, danach durch längsseitiges Zusammenschweissen der Körpersegmente (11) durch flächiges Anschmelzen der zu verbindenden Seitenflächen (8) der Körpersegmente (11) und nachfolgendes Zusammenfügen und Wiedererhärten zu Schaumstoffkörpern (7) unter Ausbildung flächiger Schweissnähte (32), wobei die flächigen Schweissnähte (32) als porenarme oder porenfreie Kunststoffzwischenschichten vorliegen;
b. längsseitiges Zusammenschweissen der Schaumstoffkörper (7) durch flächiges Anschmelzen der zu verbindenden Längsseiten (43, 44) der Schaumstoffkörper (7) und nachfolgendes Zusammenfügen und Wiedererhärten zu einem Schaumstoffblock (5) unter Ausbildung flächiger Schweissnähte (33), wobei die flächigen Schweissnähte (33) als porenarme oder porenfreie Kunststoffzwischenschichten vorliegen;
c. Aufteilung des Schaumstoffblockes (5) in einzelne flächenförmige Strukturelemente (30), insbesondere Schaumstoffplatten, quer zur Längsrichtung der Schaumstoffkörper (7),
   wobei die flächigen Schweissnähte (32, 33) in Draufsicht des flächenförmigen Strukturelementes (30) eine versteifend wirkende Steg- oder Netzstruktur ausbilden. Mit Längsrichtung wird insbesondere die Extrusionsrichtung bezeichnet.

Die Schaumstoffkörper (7) bzw. Körpersegmente (11) werden vorzugsweise mittels eines Extrusionsprozesses hergestellt. Die Schaumstoffkörper bzw. Körpersegmente weisen bevorzugt eine in Extrusionsrichtung verstreckte Orientierung des Materials auf. Dabei weisen insbesondere Polymerketten eine durch die Extrusion erfahrene Verstreckung in Extrusionsrichtung auf. Die Materialverstreckung bewirkt eine Verbesserung der mechanischen Eigenschaften, insbesondere der Druckfestigkeit, in Verstreckungsrichtung.

Die Schaumstoffkörper bzw. Körpersegmente weisen ferner bevorzugt eine in Extrusionsrichtung orientierte Zellenstruktur bzw. Zellenanordnung auf. Die orientierten Zellenstrukturen des Schaumstoffkörpers tragen hierbei zu einer Erhöhung der Druckfestigkeit des Strukturelementes bei.

In einer möglichen Ausführung der Erfindung können die stab- bzw. säulenförmigen Körpersegmente oder die Schaumstoffkörper aus einem vorgefertigten Schaumstoffblock gewonnen, d.h. geschnitten oder gesägt werden. Der genannte Schaumstoffblock wird dabei bevorzugt mittels eines Extrusionsverfahrens hergestellt.

Gemäss einer spezifischen Ausführungsvariante der Erfindung geschieht die Herstellung der Schaumstoffkörper oder der Körpersegmente mittels Extrusionsverfahren. Die Körpersegmente können beispielsweise expandierte Kunststoffstränge darstellen. Zur Erzeugung von Schaumstoffkörpern oder Körpersegmenten können die entstehenden Stränge zusammengeführt werden. Das Zusammenführen der Stränge kann unmittelbar nach Austritt aus der Extrusionsform durch das Expandieren der einzelnen Stränge erfolgen. Hierbei kommt es zum Kontakt zwischen den jeweils benachbarten Strängen und zu einem Zusammenwachsen, bzw. Verkleben oder Verschweissen derselben unter Ausbildung des Körpersegmentes, fallweise des Schaumstoffkörpers. Der jeweilige Körper liegt dabei in Form einer geschlossenen Packung von Strängen vor.

Die Stränge liegen bevorzugt im wesentlichen parallel zueinander und sind in Längsrichtung, d.h. Extrusionsrichtung, des Körpersegmentes oder Schaumstoffkörpers angeordnet. Das Herstellungsverfahren kann so ausgelegt sein, dass die einzelnen Stränge im Körpersegmente oder Schaumstoffkörper sichtbar bleiben oder zu einer einzigen Struktur zusammengeführt bzw. verschmolzen oder verschweisst werden, in welcher die einzelnen Stränge nur noch andeutungsweise bzw. gar nicht mehr erkennbar sind. Die Stränge sind vorzugsweise derart dicht gepackt, dass die einzelnen Stränge einander ganzflächig berührend anliegen, ohne Zwischenräume auszubilden.

Die Stränge werden zweckmässig durch ein Extrusionswerkzeug, welches bspw. als Formplatte vorliegt, erzeugt, wobei das Extrusionswerkzeug eine Vielzahl von benachbarten Öffnungen enthält, durch welche das Polymer strangförmig extrudiert wird. Die besagten Öffnungen können einen polygonalen, wie rechteckigen, quadratischen oder hexagonalen, Querschnitt aufweisen. Die geschäumten Stränge können eine Kantenlänge von bspw. 3 bis 50 mm, insbesondere von 4 bis 20 mm aufweisen.

Der Extrusionsform für die Erzeugung der Stränge kann ein weiteres, die Aussenkontur des herzustellenden Körpersegmentes oder des Schaumstoffkörpers wiedergebendes Formwerkzeug nachgeschaltet sein, in welches die Packung von Strängen nach Austritt aus der Extrusionsform geführt wird, so dass das Körpersegmente oder der Schaumstoffkörper die Querschnittsform des Formwerkzeuges annimmt. Mit dem oben beschriebenen Herstellungsverfahren können Körpersegmente hergestellt werden, welche bereits in der gewünschten Querschnittsform und -grösse aufweisen. Zur direkten Erzeugung von Schaumstoffkörpern kann die Extrusionsform ein die Aussenkontur des herzustellenden Schaumstoffkörpers wiedergebendes Formwerkzeug sein.

Ferner können mit den oben beschriebenen Herstellungsverfahren Schaumstoffkörper von einer Querschnittsgrösse produziert werden, welche grösser ist als der Querschnitt der benötigten Schaumstoffkörper, so dass in nachfolgenden Verarbeitungsschritten der extrudierte Schaumstoffkörper zu einzelnen stab- bzw. säulenförmigen Körpersegmenten oder Schaumstoffkörpern zugeschnitten wird.

In bevorzugter Ausführung der gemäss obigem Verfahren hergestellten Schaumstoffkörper, bzw. Körpersegmente, liegt die Ausrichtung der einzelnen Stränge der Körpersegmente, bzw. Schaumstoffkörper, im wesentlichen senkrecht zu den Deckflächen der aus Körpersegmenten gebildeten, flächigen Strukturelementen. Dabei ist die Druckfestigkeit, bedingt durch die Orientierung der Stränge, in Längsrichtung der Stränge, d.h. in Extrusionsrichtung, bevorzugt grösser als in die anderen Richtungen.

Die Körpersegmente und Schaumstoffkörper können durch Extrudieren und Aufschäumen mittels physikalischen oder chemischen Treibmitteln hergestellt werden. In bevorzugter Ausführung werden die Schaumstoffkörper, insbesondere durch ein Extrusionsverfahren hergestellte Körpersegmente oder Schaumstoffkörper, mittels eines gasförmigen Treibmittels, wie CO₂, physikalisch geschäumt. Die Zufuhr des Treibmittels kann hierbei direkt in die Extrusionsvorrichtung erfolgen. Im flächenförmige Strukturelement weisen die Körpersegmente und die Schaumstoffkörper eine in Extrusionsrichtung orientierte Verstreckung der Polymerstruktur auf.

In einer bevorzugten Ausführung der Erfindung werden die extrudierten Schaumstoffkörper längsseitig, d.h. entlang ihrer berührenden Längsseiten zu Kunststoffblöcken verschweisst. Aus diesen Kunststoffblöcken werden nachfolgend quer bzw. senkrecht zu den Längsseiten der Schaumstoffkörper flächenförmige, insbesondere plattenförmige, Strukturelemente geschnitten.

Das Schneiden der flächenförmigen Strukturelemente aus den Kunststoffblöcken kann mittels eines mechanischen Vorganges, wie Sägen, oder mittels eines physikalischen Vorganges, wie ein thermischer Schneidprozesses, geschehen.

Die Schweissverbindung erfolgt vorzugsweise durch flächiges Anschmelzen der zu verbindenden Seitenflächen der Körpersegmente und nachfolgendes zusammenfügen derselben und Aushärten der Schmelzzonen.

In einer bevorzugten Ausführungsvariante sind Mittel zur Steuerung des Anschmelzvorganges während des Schweissens vorgesehen, welche die Herstellung von Schweissnähten von einer bestimmten Dicke bzw. Dickenbereich erlauben, wobei der Dickenbereich fallweise derart gewählt wird, dass die Stegstruktur der Schweissnähte eine versteifende Wirkung auf das flächenförmigen Strukturelement ausübt.

Der Schweissvorgang ist zweckmässig ein thermoplastisches Schweissen. Die Herstellung der Schweissverbindung kann mittels Kontaktschweissen geschehen. Ein anwendbares Kunststoffschweissverfahren ist das Heizelementschweissen. Der Schweissvorgang kann ohne oder mit Zusatzstoffen erfolgen. Ein weiteres Schweissverfahren ist das Schweissen durch Strahlung, wobei die zu verschweissenden Flächen, z.B. berührungslos, durch Strahlung erhitzt werden können.

Die flächenförmigen Strukturelemente sind beispielsweise erfindungsgemäss herstellbar dadurch, dass das Anschmelzen der Schaumstoffkörper (7) mittels eines Heizschwertes (40) mit strukturierter Oberflache unter Erzeugung von nutenförmigen Vertiefungen im Schaumstoffkörper (7) erfolgt oder dass das Anschmelzen von ein- oder beidseitig mit nutenförmigen Vertiefungen strukturierten Schaumstoffkörpern (7) mittels eines Heizschwertes (40) mit unstrukturierter Oberflache erfolgt oder dass das Anschmelzen von unstrukturierten Schaumstoffkörpern (7) zuerst mittels eines Heizschwertes (40) mit unstrukturierter Oberflache und danach mittels einer Struktur verleihenden Matrize erfolgt und die angeschmolzenen Seitenflächen der Schaumstoffkörper (7), unter Ausbildung von Ausnehmungen (45) in der Schweissnaht (33), zusammengefügt werden.

Das Verfahren kann insbesondere derart ausgeführt werden, dass an einem Heizschwert (40), insbesondere eine Platte mit zwei beheizten Seitenflächen (41,42) darstellend, jeweils die sich in Extrusionsrichtung erstreckenden Längsseiten (43, 44) zweier. Schaumstoffkörper (7, 7') soweit erhitzt werden, bis die jeweils erwärmten Oberflächen der Längsseite (43, 44) der Schaumstoffkörper (7, 7') erweichen oder anschmelzen. Entsprechend der Wärmezufuhr erweicht oder schmilzt der geschäumte thermoplastische Kunststoff soweit, dass die an der Oberfläche befindlichen Zellen kollabieren und sich eine dünne Haut aus Schmelzmasse bildet. Eine oder beide Seitenflächen des Heizschwertes (40) weisen eine Struktur (46, 47, 48) auf. Die Struktur (46, 47, 48) prägt sich matrizenartig in den thermoplastischen Kunststoff ein. Die behandelten Schaumstoffkörper (7, 7') werden vom Heizschwert (40) auf Distanz gebracht und das Heizschwert (40) wird daraufhin entfernt. Die beiden erhitzten und fallweise strukturierten Oberflächen der Schaumstoffkörper (7, 7') werden in erhitztem Zustand in gegenseitige Berührung, fallweise unter Druckbeaufschlagung, gebracht, wobei die sich berührenden Oberflächen (43, 44) miteinander verschweissen und unter Abkühlung der Kunststoff erhärtet.

Die Oberfläche des Heizschwertes kann auf ein möglichst geringes Haftvermögen hin beschichtet oder bearbeitet sein. Es kann dies eine Teflonbeschichtung oder Chrombeschichtung sein oder die Oberfläche kann eine durch Polieren oder Glänzen etc. bearbeitete Chrom- oder Aluminiumoberfläche sein.

In einer Ausführungsform des Verfahrens kann das Heizschwert an einer oder beiden Oberflächen eine Struktur aufweisen. Die Struktur kann durch eine Mehrzahl von parallel in Abstand angeordneten Profilstäben gebildet sein. Die Profilstäbe erstrecken sich vorteilhaft über die ganze Höhe des Heizschwertes und sind z.B. über die ganze Breite einer oder beider Oberflächen, vorzugsweise in gleichen Abständen, auf der Oberfläche verteilt. Im Falle von Profilstäben an beiden Oberflächen können diese einander genau gegenüber liegen oder können gegeneinander versetzt sein.

Sind die Profilstäbe an beiden Oberflächen des Heizschwertes genau gegenüber liegend, so prägt sich deren Struktur in den thermoplastischen Kunststoff der jeweiligen Schaumstoffkörper ein. Beim Verschweissen der beiden strukturierten Oberflächen der Schaumstoffkörper liegen die eingeprägten Strukturen spiegelbildlich einander gegenüber und bilden eine einzelne grosse Ausnehmung. Liegen die Profilstäbe an beiden Oberflächen des Heizschwertes wechselweise gegenüber, so prägt sich deren Struktur in den thermoplastischen Kunststoff der jeweiligen Schaumstoffkörper ein. Beim Verschweissen der beiden strukturierten Oberflächen der Schaumstoffkörper liegen die eingeprägten Strukturen wechselweise einander gegenüber und bilden gegenüber der vorbeschriebenen Ausführungsweise die doppelte Zahl an kleinen Ausnehmungen. Die Struktur ist derart am Heizschwert angeordnet, dass die entstehenden Ausnehmungen am Schaumstoffkörper in dessen Extrusionsrichtung laufen.

Die Struktur auf einer oder beiden Seiten des Heizschwertes kann auch ein Muster von über die Oberfläche des Heizschwertes schräg oder diagonal parallel laufend angeordneten Profilstäben oder schräg oder diagonal sich kreuzend angeordneten Profilstäben, sein. Im Falle von Profilstäben an beiden Oberflächen können diese einander genau gegenüber liegen oder können gegeneinander versetzt sein. Bei sich kreuzenden Profilstäben bilden die Profilstäbe beispielsweise ein Fachwerk- oder Waffelmuster oder eine Gitterstruktur an einer oder beiden Oberflächen des Heizschwertes (40) als Struktur aus. Die sich kreuzenden Profilstäben, bilden beispielsweise ein Fachwerk- oder Waffelmuster oder eine Gitterstruktur aus. Die schräg oder diagonal laufenden Profilstäbe können in einem beliebigen Winkel, insbesondere von 0° - 90°, bezüglich einer Seitenkante des Heizschwertes laufen und die Profilstäbe sind beispielsweise in einem Winkel von etwa 1° - 60°, zweckmässig von 15° - 60°, insbesondere von 30° - 45° und ganz besonders bevorzugt von 45°, angeordnet. Entsprechend, durch kreuzende Profilstäbe, werden sich kreuzende Ausnehmungen, in z.B. einem Fachwerk- oder Waffelmuster oder in Gitterstruktur, zwischen den Schaumstoffkörpern geschaffen. Durch die schräg, resp. diagonal, laufenden Profilstäbe entstehenden Ausnehmungen im Schaumstoffkörper können in einem beliebigen Winkel, d.h. 0° - 90°, bezüglich einer Achse parallel zur Längsseite und in Extrusionsrichtung des Schaumstoffkörpers laufend, angeordnet sein. D.h. die Ausnehmungen können beispielsweise in einem Winkel von etwa 1° - 60°, zweckmässig von 15° - 60°, insbesondere von 30° - 45° und ganz besonders bevorzugt von 45°, angeordnet sein. Es ist auch möglich, Ausnehmungen, die in der Achse parallel zur Längsseite (0°) laufen und weitere Ausnehmungen, die in einem beliebigen anderen Winkel zu der Achse parallel zur Längsseite laufen, am Schaumstoffkörper anzubringen.

Die Profilstäbe können beispielsweise eine halbrunden, segmentförmigen, U- oder V-förmigen, kegelstumpfförmigen oder polygonalen, wie dreieckigen, quadratischen oder rechteckigen, Querschnitt aufweisen.

Das Heizschwert wird üblicherweise in linearer Richtung aus dem Bereich zwischen den erhitzten Oberflächen der Längsseiten der Schaumstoffkörper ausgeleitet und danach die erhitzten Längsseiten der Schaumstoffkörper in gegenseitige Berührung gebracht. Nach dem Erhitzungsvorgang können die erhitzten, resp. erhitzten und geprägten Schaumstoffkörper entformt, danach das Heizschwert entfernt und die erhitzten Seitenflächen in gegenseitige Berührung gebracht werden.

Das Verfahren kann in anderer Weise beispielsweise derart ausgeführt werden, dass an einem Heizschwert, insbesondere eine Platte mit zwei beheizten unstrukturierten, glattflächigen Seitenflächen darstellend, die gegenüberliegenden Längsseiten zweier Schaumstoffkörper, wobei eine oder beide Längsseiten der Schaumstoffkörper bereits mit Nuten, Rillen oder Einfräsungen strukturiert sind, soweit erhitzt werden, dass die Oberflächen der Schaumstoffkörper erweicht oder anschmilzt. Das Heizschwert wird daraufhin entfernt und die beiden strukturierten erhitzten Oberflächen der Schaumstoffkörper in gegenseitige Berührung, fallweise unter Druckbeaufschlagung, gebracht, wobei unter Abkühlung der Kunststoff erhärtet. Nuten, Rillen oder Einfräsungen können durch spanende Verfahren, wie fräsen, an den Seitenflächen der Schaumkörper angebracht werden. Es ist auch möglich die Nuten oder Rillen durch thermische Beaufschlagung der Oberflächen, wie einprägen mittels erhitzter Matrize oder durch strukturieren mit energiereicher Strahlung, z.B. durch Laser. Nuten oder Rillen können durch entsprechende Matrizen während dem Extrusionsprozess und Schäumprozess am entstehenden Schaumstoffkörper, resp. Körpersegment, angebracht werden. Thermische Verfahren sind bevorzugt, da die geschlossenzellig vorliegenden Poren nicht aufgerissen und geöffnet werden. Durch spanende Vorgänge geöffnete Poren sind fallweise weniger günstig, da sich bei der spätem Verarbeitung zur Strukturbauteilen oder Verbundplatten etc. in den Porenräumen Harz ansammeln kann. Dies kann zu höheren spezifischen Dichten der Schaumstoffkörper und zu erhöhtem Gewicht der Strukturbauteilen oder Verbundplatten etc. führen. Die Nuten, Rillen oder Einfräsungen können beabstandet parallel, insbesondere in Extrusionsrichtung laufend, angeordnet werden oder ein Muster bilden. Das Muster kann über die Oberfläche der Längsseite des Schaumstoffkörpers gerade, schräg oder diagonal parallel laufend angeordneten Nuten, Rillen oder Einfräsungen oder gerade, schräg oder diagonal sich kreuzend angeordneten Nuten, Rillen oder Einfräsungen, bilden. Im Falle von Nuten, Rillen oder Einfräsungen an den beiden zu verschweissenden Oberflächen, können diese einander genau gegenüber liegen oder können gegeneinander versetzt sein. Bei sich kreuzenden Nuten, Rillen oder Einfräsungen bilden diese beispielsweise ein Fachwerk- oder Waffelmuster oder eine Gitterstruktur aus. Entsprechend, durch kreuzende Nuten, Rillen oder Einfräsungen, werden sich kreuzende Ausnehmungen, in z.B. einem Fachwerk- oder Waffelmuster oder in Gitterstruktur, zwischen den Schaumstoffkörpern geschaffen. Durch die schräg, resp. diagonal, laufenden Nuten, Rillen oder Einfräsungen entstehenden Ausnehmungen im Schaumstoffkörper können in einem beliebigen Winkel, d.h. 0° - 90°, bezüglich einer Achse parallel zur Längsseite und in Extrusionsrichtung laufend, des Schaumstoffkörpers angeordnet sein. D.h. die Ausnehmungen können beispielsweise in einem Winkel von etwa 1° - 60°, zweckmässig von 15° - 60°, insbesondere von 30° - 45° und ganz besonders bevorzugt von 45°, angeordnet sein. Es ist auch möglich, Ausnehmungen, die in der Achse parallel zur Längsseite (0°) laufen und weitere Ausnehmungen, die in einem beliebigen Winkel zu der Achse parallel zur Längsseite laufen, am Schaumstoffkörper anzubringen.

Das Verfahren kann in wieder anderer Weise beispielsweise derart ausgeführt werden, dass an einem Heizschwert, insbesondere eine Platte mit zwei beheizten unstrukturierten, glattflächigen Seitenflächen darstellend, die gegenüberliegenden Längsseiten zweier Schaumstoffkörper, soweit erhitzt werden, dass die Oberflächen der Schaumstoffkörper erweicht oder anschmilzt. Das Heizschwert wird daraufhin entfernt. Anstelle des Heizschwertes wird eine Matrize, beispielsweise eine kammartige Matrize zwischen die beiden erhitzten Oberflächen der Schaumstoffkörper eingeführt und die Matrize und die Schaumstoffkörper, fallweise unter Druckbeaufschlagung, in gegenseitige Berührung gebracht, wobei der Kunststoff verschweisst und unter Abkühlung erhärtet und die Matrize danach aus der Schmelz-, resp. Erweichungszone, der beiden Schaumstoffkörper ausgeleitet wird. Zur Formgebung der Ausnehmungen kann die kammartige Matrize eine Mehrzahl von auf gerader Linie beabstandete parallel ausgerichtete stabartige Zinken aufweisen. Der Querschnitt der Zinken, der gerundet, rund oder polygonal sein kann, formt - wie die genannten Profilstäbe -- den Querschnitt der Ausnehmungen. Die Länge der Zinken entspricht zumindest der zu strukturierenden Längsseite des Schaumstoffkörpers. Die durch die Zinken erzeugten Ausnehmungen laufen im Schaumstoffkörper insbesondere in Extrusionsrichtung.

Die flächenförmigen Strukturelemente weisen gegenüber herkömmlichen geschäumten Kunststoffplatten beispielsweise eine höhere Steifigkeit, eine höhere Druckfestigkeit und höhere Schubbruchdehnung auf. Diese Eigenschaften werden wenigstens teilweise durch die Schweissnähte zwischen den einzelnen Körpersegmenten, resp. Schaumstoffkörpern begründet. Die Schweissnähte bilden Stege oder ein Netzwerk von Verbindungen in der Art eines Gerüstes, wobei die Schweissnähte in Form von porenarmen bzw. porenfreien, dichten Kunststoffzwischenschichten vorliegen. Das Gerüst der steg- oder netzartigen Verbindungen der Schweissnähte erhöht die Druckfestigkeit, da die Stege der Kunststoffzwischenschicht wesentlich weniger kompressibel sind als die Schaumstoffkörper selber. Wird beispielsweise auf das erfindungsgemässe Strukturelement ein Flächendruck ausgeübt (z.B. bei einem Sandwich-Verbund ein Flächendruck über die Deckschichten auf das Strukturelement in Funktion als Kernschicht), so wirken die Druckkräfte primär auf die steife Steg- oder Netzstruktur und nicht auf den Schaumstoffkörper selbst. Die Erhöhung der Steifigkeit erfindungsgemässer Strukturelemente resultiert ebenfalls aus der gerüstartig aufgebauten Struktur der Schweissnähte, welche zu einer erhöhten Verwindungs- und Biegesteifigkeit des Strukturelementes führen.

An den erfindungsgemässen flächenförmigen Strukturelemente können die Wände der Ausnehmungen porenarme bzw. porenfreie dichte Kunststoffschichten bilden. Die Ausnehmungen, die das flächenförmigen Strukturelement in der Regel in seiner ganzen Dicke durchdringen, deren Zahl und die Dicke der Wandungen können zu einer weiteren Erhöhung der Steifigkeit, der Druckfestigkeit und der Schubbruchdehnung des flächenförmigen Strukturelementes führen. Entstehen die Ausnehmungen mit der Verschweissung der Schaumstoffkörper, entstehen die Wandungen der Ausnehmungen, gleich wie die Schweissverbindungen, zweckmässig durch Schmelzen und Wiedererhärten und sind porenarme oder insbesondere porenfreie Kunststoffschichten. Der Querschnitt der Ausnehmungen stellt beispielsweise ein Abbild oder Abdruck des formgebenden Profilstabes dar. Die Wandungen der Ausnehmung besteht im wesentlichen aus dem thermoplastischen Kunststoff der beim Erhitzungsprozess verformten oder kollabierten und verschmolzenen Zellen des Schaumstoffes. Am flächenförmigen Strukturelement sind demnach die Schweissnähte der Körpersegmente, die Schweissnähte der Schaumstoffkörper und die Wände der Ausnehmungen zweckmässig aus dem aufgeschmolzenen und wiedererhärteten Kunststoff gebildet.

Durch Druck- und Hitzeeinwirkung kann die Dicke oder Festigkeit der Wandungen gesteuert werden. Die Ausnehmungen durchdringen in der Regel auch die ganze Dicke des Schaumstoffblockes und bilden rohr- oder röhrchenartige Durchlässe. Da das flächenförmige Strukturelement ein quer zur Laufrichtung der Ausnehmungen vom Schaumstoffblock abgetrenntes Teil darstellt, finden sich die Ausnehmungen entsprechend in Form und Zahl im flächenförmigen Strukturelement.

Die flächenförmigen Strukturelemente nach vorliegender Erfindung weisen pro Quadratmeter Deckfläche wenigstens 200, zweckmässig wenigstens 400, bis zu 60'000, vorzugsweise bis zu 40'000, Ausnehmungen auf. Mit Deckfläche wird diejenige Oberfläche des flächenförmigen Strukturelementes bezeichnet, in welcher die Ausnehmungen angeordnet sind. Am flächenförmigen Strukturelement weisen die Ausnehmungen einen Durchmesser oder mittleren Durchmesser oder Kantenlängen von beispielsweise 0,2 bis 10 mm, zweckmässig von 1 bis 5 mm und vorzugsweise 2 bis 3 mm, auf. Der gegenseitige Abstand der Ausnehmungen in der jeweiligen Schweissnaht kann beispielsweise 2 bis 100 mm betragen. Vorzugsweise beträgt der Abstand zwischen den Ausnehmungen innerhalb der jeweiligen Schweissnaht etwa das 2- bis 20-fache, insbesondere das 5- bis 10-fache, des Durchmessers oder der grössten Kantenlänge der Ausnehmung.

Das flächenförmige Strukturelement stellt insbesondere ein quer zur Laufrichtung der Ausnehmungen vom Schaumstoffblock abgetrenntes Teil dar. Die Höhe h des flächenförmigen Strukturelementes kann beispielsweise von 3 bis 1000 mm betragen, wobei eine Höhe von 5 bis 500 mm zweckmässig, von 10 bis 400 mm bevorzugt und von 20 bis 250 mm besonders bevorzugt ist.

Das erfindungsgemässe Strukturelement findet Verwendung in Verbundbauteilen und Sandwich-Verbundelementen, wie Verbundplatten. Sandwich-Verbundelementen, wie Sandwich-Verbundplatten, können eine Kernschicht, insbesondere ein erfindungsgemässes Strukturelement und ein- oder beidseitig angeordnet, Deckschichten oder eine Beplankung aufweisen. Wird das erfindungsgemässe flächenförmige Strukturelement als Kernschicht in einer Sandwich-Verbundplatte verwendet, so ist das Strukturelement zweckmässig ein Plattenelement.

Verbundbauteile oder Formkörper enthalten beispielsweise eine Aussenhaut oder Deckschicht und einen Kern. Besonders bevorzugt finden die erfindungsgemässen flächenförmigen Strukturelemente Verwendung als Kernmaterial oder Kernschicht in Formkörpern oder Verbundbauteilen. Es wird beispielsweise ein erfindungsgemässes Strukturelement als Kernschicht in eine Hohlform unter Ausbildung eines Spaltraumes zwischen Kern und Formwandung, eingelegt. Fallweise können im Spalt Verstärkungsmaterialien, wie Fasern, beispielsweise als solche, als Gewebe, Gespinste oder Gestricke usw., eingelegt sein. Durch ein Injektions- oder Infusionsverfahren wird das Harz zugeführt. Die Hohlform kann beispielsweise evakuiert und Harz, wie z.B. ein Polyesterharz, ein Epoxyharz oder ein Vinylesterharz, in fliessfähiger Form, in die Hohlform eingespritzt oder injiziert werden. Das Harz verteilt sich zwischen Deckschicht oder Aussenhaut und Kernschicht und durchdringt oder durchfliesst insbesondere die Ausnehmungen im flächenförmige Strukturelement. Die Ausnehmungen müssen demnach für das Harz durchgängig sein. Damit wird eine gleichmässige Verteilung des Harzes innerhalb des Spaltraumes erreicht, wobei das durch das Kernmaterial hindurch fliessende Harz dessen gleichmässige Verteilung im ganzen Formenhohlraum unterstützt. Falls es die Aufgabe ist, die Dichte des Verbundbauteiles insgesamt, resp. des Strukturelementes, möglichst wenig zu erhöhen soll Zahl und/oder Durchmesser, resp. das Volumen der Ausnehmungen, möglichst klein sein. Wird jedoch auf eine strukturelle Verstärkung des Verbundelementes abgezielt, so dient das in den entsprechend voluminöser gestalteten und/oder zahlreicheren Ausnehmungen des Strukturelementes verbleibende ausgehärtete oder abgebundene Harz der weiteren Verstärkung durch Erhöhung der Steifigkeit, der Druckfestigkeit und der Schubbruchdehnung.

Sandwich-Verbundelemente mit erfindungsgemässen Strukturelementen als Kernschicht weisen trotz ihres geringen Gewichtes eine hohe Steifigkeit und eine ausgezeichnete Schub- und Druckfestigkeit auf. Solche Sandwich-Strukturen eignen sich deshalb insbesondere für Anwendungen, welche leichte, jedoch strukturell hoch belastbare Komponenten erfordern. Die Deckschichten können z.B. starre oder biegsame Platten aus Kunststoff oder faserverstärktem Kunststoff, wie glasfaserverstärktem Kunststoff, sein. Ferner können die Deckschichten auch Platten bzw. Bleche aus Metall, insbesondere aus Aluminium oder einer Aluminiumlegierung sein. Die Deckschichten sind im Vergleich zur Kernschicht vorzugsweise verhältnismässig dünne Platten. Sandwich-Verbundelemente mit erfindungsgemässen Strukturelementen als Kernschicht können z.B. als Konstruktionselemente im Bauwesen eingesetzt werden. Beispiele für solche Konstruktionselemente sind Wände, Böden, Decken, Türen, Zwischenwände, Trennwände oder Verkleidungselemente. Dies können z.B. Sandwich-Verbundelemente für Kofferaufbauten, Ladebrücken, Wände, Decken, Türen, Deckel, Verkleidungen oder Teile davon, auf oder an Lastkraftwagen oder Eisenbahnwagen zum Gütertransport oder Wände, Decken, Böden, Zwischenwände, Verkleidungselemente, Türen, Deckel oder Teile davon, an Fahrzeugen zum Personentransport, wie Omnibussen, Strassenbahnen, Eisenbahnwagen oder auf Schiffen, wie Passagierschiffen, Fähren, Ausflugsdampfem oder -booten sein.

Verbundbauteile mit erfindungsgemässen Strukturelementen als Kernmaterial finden u.a. Einsatz im Transportwesen zu Land (z.B. Strassen- oder Schienenfahrzeugbau), zu Wasser (z.B. Schiff- oder Bootsbau, Wassersportgerätebau) oder in der Luft (z.B. Flugzeugbau), jedoch auch, wie die Sandwich-Verbundelemente in Sportartikeln für den Einsatz zu Land, im Wasser oder in der Luft.

Bevorzugt finden die Verbundbauteile mit erfindungsgemässen Strukturelementen Einsatz als Kern oder Kernschichten in Rotorblättern, zum Bewegen von Fluiden, insbesondere Gasen, wie Luft oder als Kern oder Kernschichten in Rotorblättern von Windkraftanlagen. Besonders bevorzugt ist die Verwendung der erfindungsgemässen Strukturelementen als Kernmaterial in Windflügeln oder Rotorblättern für Windkraftanlagen.

Im folgenden wird die Erfindung beispielhaft und mit Bezug auf die beiliegenden Zeichnungen näher erläutert. Es zeigen:
- Fig. 1:: Eine Explosionsdarstellung eines Sandwich-Verbundes mit einem erfin- dungsgemässen Strukturelement als Kernschicht;
- Fig. 2:: Einen Querschnitt durch einen Sandwich-Verbund mit einem erfindungs- gemässen Strukturelement als Kernschicht;
- Fig. 3:: Draufsicht auf ein erfindungsgemässes Strukturelement;
- Fig. 4:: Perspektivische Darstellung eines Kunststoffblockes zur Herstellung von erfindungsgemässen Strukturelementen;
- Fig. 5:: Perspektivische Darstellung des Fügens eines Schaumstoffblockes zur Herstellung von erfindungsgemässen Strukturelementen;
- Fig. 6:: Perspektivische Darstellung des Sägens eines Kunststoffblockes zu erfin- dungsgemässen Strukturelementen;
- Fig. 7:: Querschnitt durch Beispiele von Struktur gebenden Profilstäbe an Heiz- schwertern.

Fig. 1 zeigt ein Sandwich-Verbundelement 1 mit einer Kernschicht aus einem erfindungsgemässen flächenförmigen Strukturelement 10, welches als Kunststoffplatte aus geschäumten und gegenseitig verschweissten Körpersegmenten ausgebildet ist. Die Kunststoffplatte 10 besteht aus quaderförmigen Körpersegmenten 11, welche über Längs- 12 und Querschweissnähte 13 ausbildende, flächigen Schweissverbindungen an ihren berührenden Seitenflächen 17 miteinander verbunden sind. Die Schweissnähte 12, 13 bilden hierbei (in Platten-Draufsicht) eine netzartige, steife Stegstruktur aus. Beidseits der Kernschicht, auf den Deckflächen 16 der Körpersegmente 11, ist jeweils eine Deckschicht 2, 3 angeordnet. Die Deckschichten 2, 3 können beispielsweise aus Kunststoffplatten, faserverstärkten Kunststoffplatten (z.B. glasfaserverstärkte Duro- oder Thermoplaste) oder Metallblechen, wie Aluminiumblechen, bestehen. Die Ausnehmungen sind der besseren Übersicht halber nicht gezeigt.

Fig. 2 zeigt ein Sandwich-Verbundelement 1 gemäss Fig. 1 in Querschnittsansicht. Die Deckschichten 2, 3 sind mit der Kernschicht 11 verbunden. Sichtbar sind die Querschweissnähte 13.

Fig. 3 zeigt eine Ausführungsformen eines erfindungsgemässen Strukturelementes in Form einer Kunststoffplatte 20 aus übereinander gestapelten und gegenseitig über die Schweissnähte 23 verschweissten Schaumstoffkörpern 27. Die Schaumstoffkörper sind aus gegenseitig über die Schweissnähte 22 verschweissten nebeneinander liegend angeordneten Körpersegmenten 21 gebildet.

Die Kunststoffplatte 20 gemäss Fig. 3 enthält Körpersegmente 21 mit in Platten-draufsicht rechteckigem Querschnitt. Die Körpersegmente 21 gemäss Fig. 3 sind zu mehreren nebeneinander in einer Ebene angeordnet, wobei die Schweissverbindungen 22 zwischen den Körpersegmenten 11 Stege ausbilden. Die zu mehreren nebeneinander in einer Ebene angeordnet Körpersegmente 21 gemäss Fig. 3 bilden die Schaumstoffkörper 27, die in mehreren übereinander gestapelten Lagen mit zueinander verschobenen Schweissverbindungen 22, wobei die Schweissverbindungen eine ziegelsteinmauerartige Struktur mit durchgehenden Querschweissnähten 23 und zueinander versetzten Längsschweissnähten 22 ausbilden.

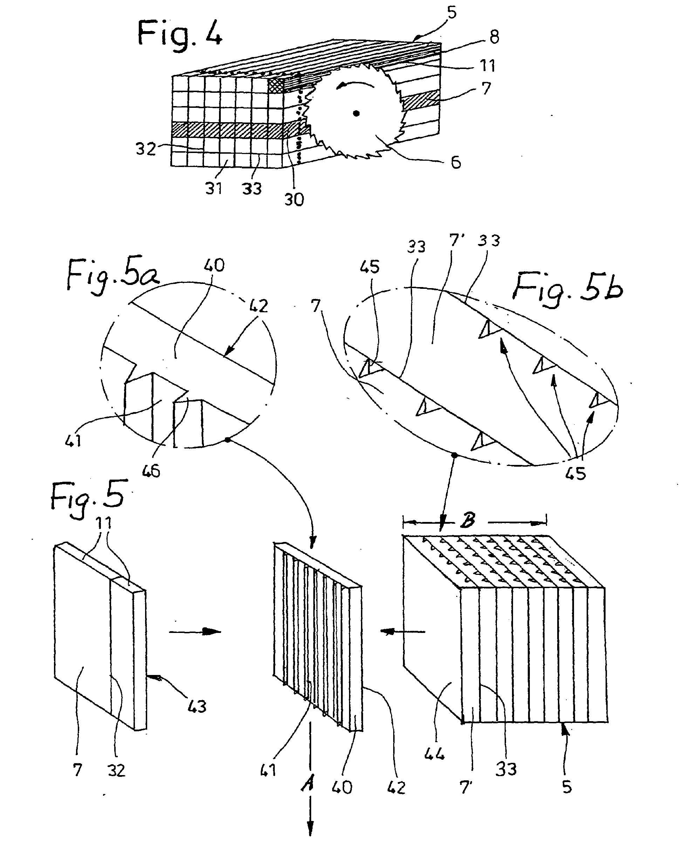

Fig. 4 zeigt aus säulen- bzw. stabförmigen Körpersegmenten 11, wobei die Körpersegmente 11 (beispielhaft ein einzelner Körper längsschraffiert) z.B. durch Extrusion hergestellt sind, gebildete Schaumstoffkörper 7 (beispielhaft ein einzelner Körper schrägschraffiert), die ihrerseits gestapelt und gegenseitig verschweisst den Schaumstoffblock 5 bilden. Die einzelnen Körpersegmente 11 sind mittels Kunststoffschweissen unter Ausbildung von Längsschweissnähten 32 entlang ihrer Längsseiten 8 miteinander zu den Schaumstoffkörpern 7 verbunden. Die Schaumstoffkörper 7 sind unter Ausbildung der Querschweissnähte 33 zum Schaumstoffblock 5 verbunden. Durch Zersägen 6 oder thermisches Schneiden (entlang der punktierten Linie) wird der Schaumstoffblock 5 in einzelne Kunststoffplatten 30, den erfindungsgemässen flächenförmigen Strukturelementen, aufgeteilt.

Figur 5 zeigt das Fügen des Schaumstoffblockes 5 mittels dem Heizschwert 40. Ein im Aufbau befindlicher Schaumstoffblock 5, aus einer Mehrzahl von bereits über die Schweissnähte 33 geschweissten Schaumstoffkörpern, mit dem aussen liegenden Schaumstoffkörper 7', wird in Pfeilrichtung gegen das erhitzte Heizschwert 40 und insbesondere die hier unstrukturierte Oberfläche 42 geführt. An die Gegenseite des Heizschwertes 40, an die strukturierten Oberfläche 42, wird ein Schaumstoffkörper 7 in Pfeilrichtung herangeführt. Der Schaumkörper 7 ist hier beispielhaft aus zwei Körpersegmenten 11, die über Schweissnaht 32 verbunden sind, gefertigt. Die Teile 5, 40, 7 werden gegeneinander geführt, vorzugsweise unter einem Anpressdruck, derart, dass eine gleichmässige Wärmeübertragung stattfindet und sich die strukturierte Oberfläche 41 wie eine Matrize in die Oberfläche 43 des Schaumstoffkörpers 7 einprägt. Unter der Wärmeinwirkung des Heizschwertes 40 erweichen oder schmelzen die thermoplastischen Kunststoffe der Schaumstoffkörper 7, 7' an den Oberflächen 43, 44. Bei einer zum Verschweissen hinreichenden Schmelzviskostät wird das Heizschwert 40 zwischen den beiden Längsseiten der Schaumstoffkörper 7, 7' in A-Richtung entfernt und die beiden Längsseiten 7, 7' gegeneinander geführt und unter zumindest leichtem Anpressdruck verschweissen die heissen Oberflächen 43, 44 und bilden nach dem Erkalten eine weitere trennfeste Schweissnaht 33 aus. Soweit nicht durch die Ausnehmungen 45 unterbrochen, sind die Schaumstoffkörper 7,7' insbesondere vollflächig über die Schweissnähte 33 verschweisst. Der Vorgang wird wiederholt, bis die gewünschte Länge in Richtung B des Schaumstoffblockes 5 erreicht ist.

Beispielhaft zeigt der Ausschnitt in Fig. 5a aus dem Heizschwert 40 dessen unstrukturierte Oberfläche 42 und die mit querschnittlich dreieckigen Form gebenden Profilstäbe 46 versehene strukturierte Oberfläche 41. Die Oberfläche 41 ist mit einer Mehrzahl von Profilstäben 46 versehen. Die Profilstäbe 46 verlaufen insbesondere parallel und in Bewegungsrichtung des Heizschwertes 40. Die Profilstäbe 46 laufen zumindest über die ganze Höhe der wirksamen Oberfläche 41 des Heizschwertes 40. Der Abstand der Profilstäbe 46 richtet sich nach der Anzahl der gewünschten Ausnehmungen 45 und kann beispielsweise 2 bis 100 mm betragen. Die Länge der Seitenkanten der vorliegend dreieckförmigen Form der Profilstäbe 46 kann beispielsweise 0,2 bis 10 mm betragen. Entsprechend der Form und der Anzahl der Profilstäbe 46 bilden sich zwischen den beiden aneinander stossenden Schaumstoffkörper 7, 7' die Ausnehmungen 45, hier dreieckigen Querschnittes. Fig. 5b zeigt einen vergrösserten Ausschnitt aus dem Schaumstoffblock 5, mit den beiden über die Nähte 33 verschweissten Schaumstoffkörpern 7,7' und den geformten Ausnehmungen 45.

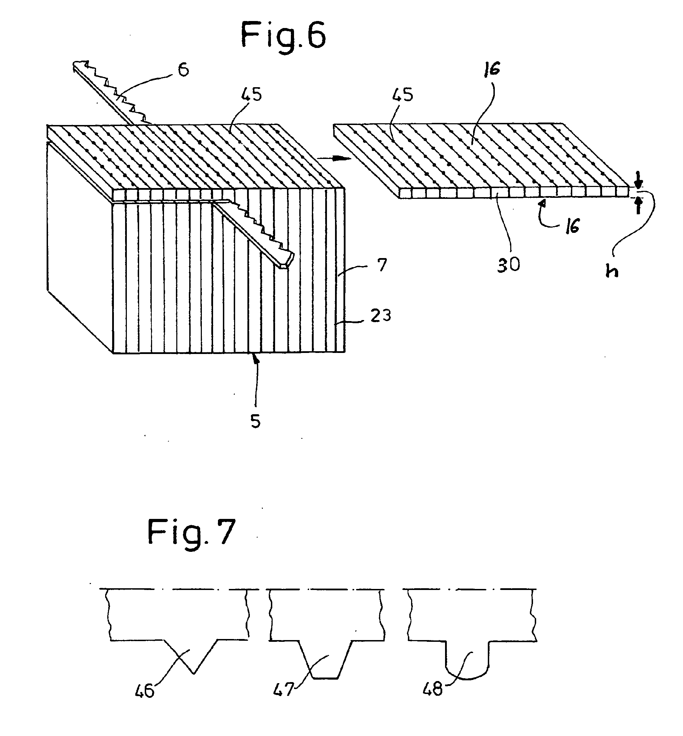

Hat der Schaumstoffblock 5 durch aneinanderfügen der Schaumstoffkörper 7 über die Schweissnähte 33 seine gewünschte Grösse erreicht, können, wie in Figur 6 gezeigt, mit einem Trennmittel, wie einer Säge 6, die erfindungsgemässen flächenförmigen Strukturelemente 10 in der gewünschten Höhe h oder Dicke, die beliebig sein kann und besonders bevorzugt 20 bis 250 mm betragen kann, abgetrennt werden. Die flächenförmigen Strukturelemente 10 werden quer zum Verlauf der Ausnehmungen 45 abgetrennt. Die Ausnehmungen 45 durchlaufen den ganzen Schaumstoffblock 5 und entsprechend vollständig die Höhe oder Dicke des abgetrennten Strukturelementes 10. Die Ausnehmungen 45 enden somit jeweils an den Deckflächen 16 des Strukturelementes 10 und bilden somit Durchlässe.

Figur 7 zeigt verschiedene beispielhaft mögliche querschnittliche Formen von Profilstäben, wie eine V- oder Dreiecksform 46, eine Kegelstumpfform 47 oder eine U-Form 48. Die Profilstäbe 46, 47 oder 48 können in einer Mehrzahl die Oberflächenstruktur einer oder beider Oberflächen 41, 42 des Heizschwertes 40 formen. Es ist auch möglich, die gleichen Querschnittsformen in Negativform als Nuten oder Rillen in die Schaumkörper einzuformen, wie einzufräsen oder thermisch einzuformen und die gerillten oder geprägten Schaumkörper gegenseitig zu verschweissen. Die gezeigten Formen sind nicht beschränkend.

### Bezugszeichenliste

- 1: Sandwich-Verbundelement
- 2: Deckschicht
- 3: Deckschicht
- 5: Schaumstoffblock
- 6: Säge
- 7, 27: Schaumstoffkörper
- 8: Längsseite des Körpersegmentes
- 10, 20, 30: Kunststoffplatte, flächenförmiges Strukturelement
- 11,21,31: Körpersegment
- 12, 22, 32: (Längs-) Schweissnaht
- 13,23,33: (Quer-) Schweissnaht
- 16: Deckfläche
- 17: Seitenfläche
- 40: Heizschwert
- 41: Strukturierte Oberfläche
- 42: Unstrukturierte Oberfläche
- 43: Längsseite des Schaumstoffkörpers 7
- 44: Längsseite des Schaumstoffkörpers 7
- 45: Ausnehmungen
- 46: Formgebender Profilstab in V-Form
- 47: Formgebender Profilstab in Kegelstumpfform
- 48: Formgebender Profilstab in U-Form

## Patentansprüche

1. Flächenförmiges Strukturelement (10), als Abschnitt aus einem Schaumstoffblock (5), wobei der Schaumstoffblock (5) aus einem geschäumten Kunststoff besteht und eine Mehrzahl von gestapelten Schaumstoffkörpern (7) enthält insbesondere
Schaumstoffkörper (7) aus durch in einer Ebene nebeneinander angeordneten und miteinander zu den Schaumstoffkörpern (7) verbundenen Körpersegmenten (11), die an ihren anstossenden Flächen flächige Schweissnähte (13) aufweisen, und wobei die Schaumstoffkörper (7) an ihren anstossenden Flächen unter Ausbildung flächiger Schweissnähte (12) gegenseitig zum Schaumstoffblock (5) verschweisst sind,
**dadurch gekennzeichnet, dass**
die Schweissnähte von in Abstand zueinander stehenden Ausnehmungen unterbrochen sind.

2. Flächenförmiges Strukturelement nach Anspruch 1, **dadurch gekennzeichnet,**
**dass** die Schweissnähte (12) zwischen den Schaumstoffkörpern (7) von in Abstand zueinander stehenden Ausnehmungen (45) unterbrochen sind.

3. Flächenförmiges Strukturelement nach Anspruch 1 oder 2, **dadurch gekennzeichnet, dass** die flächigen Schweissnähte (12) eine porenarme oder porenfreie Kunststoffzwischenschicht in Form einer in Draufsicht versteifend wirkenden Stegstruktur ausbilden und die Ausnehmungen (45) porenarme oder porenfreie Wände aufweisen.

4. Flächenförmiges Strukturelement nach einem der Ansprüche 1 bis 3, **dadurch gekennzeichnet, dass** die Schweissnähte (13) der Körpersegmente (11), die Schweissnähte (12) der Schaumstoffkörper (7) und Wände der Ausnehmungen (45) aus dem aufgeschmolzenen und wiedererhärteten thermoplastischen Kunststoff gebildet sind.

5. Flächenförmiges Strukturelement nach einem der Ansprüche 1 bis 4, **dadurch gekennzeichnet, dass** die Dicke der Schweissnähte (12, 13) und/oder die Wandstärke der Ausnehmungen (45) derart festgelegt ist, dass die netzartige Stegstruktur der Schweissnähte und/oder die Wandungen der Ausnehmungen (45) die Festigkeit des Strukturelementes (10) verbessert.

6. Flächenförmiges Strukturelement nach einem der Ansprüche 1 bis 5, **dadurch gekennzeichnet, dass** die Schaumstoffkörper (7) oder die Körpersegmente (11) mittels Extrusion hergestellt sind, und die Schweissnahtflächen (32, 33) sowie die Ausnehmungen (45) in Extrusionsrichtung der Schaumstoffkörper (7) liegen.

7. Flächenförmiges Strukturelement nach einem der Ansprüche 1 bis 6, **dadurch gekennzeichnet, dass** die Schaumstoffkörper (7) oder die Körpersegmente (11) mittels Extrusion hergestellt sind, und die Schweissnahtflächen (32, 33) in Extrusionsrichtung der Schaumstoffkörper (7) liegen und die Ausnehmungen, bezogen auf eine Achse parallel zur Längsseite der Schaumstoffkörper und in Extrusionsrichtung laufend, in einem Winkel von 0° oder grösser, zweckmässig von 0 bis 90°, besonders zweckmässig 1° - 60°, vorteilhaft von 15° - 60°, insbesondere von 30° - 45° und ganz besonders bevorzugt von 45° , angeordnet sind.

8. Flächenförmiges Strukturelement nach einem der Ansprüche 1 bis 7, **dadurch gekennzeichnet, dass** das flächenförmige Strukturelement (10) beidseits Deckflächen (16) aufweist und pro Quadratmeter Deckfläche (16) wenigstens 200, zweckmässig wenigstens 400, und bis zu 60'000, vorzugsweise bis zu 40'000, Ausnehmungen (45) aufweist

9. Flächenförmiges Strukturelement nach einem der Ansprüche 1 bis 8, **dadurch gekennzeichnet, dass** die Ausnehmungen (45) einen Durchmesser oder mittleren Durchmesser oder eine Kantenlänge von 0,2 bis 10 mm, zweckmässig von 1 bis 5 mm und vorzugsweise 2 bis 3 mm, aufweisen.

10. Flächenförmiges Strukturelement nach einem der Ansprüche 1 bis 9, **dadurch gekennzeichnet, dass** der gegenseitige Abstand zwischen den Ausnehmungen (45) innerhalb der jeweiligen Schweissnaht (23, 33) 2 bis 100 mm beträgt

11. Flächenförmiges Strukturelement nach einem der Ansprüche 1 bis 10, **dadurch gekennzeichnet, dass** der Abstand zwischen den Ausnehmungen (45) innerhalb der jeweiligen Schweissnaht (23, 33) das 2- bis 20-fache, insbesondere das 5- bis 10-fache, des Durchmesser, des mittleren Durchmessers oder der grössten Kantenlänge der Ausnehmung (45) beträgt.

12. Flächenförmiges Strukturelement nach einem der Ansprüche 1 bis 11, **dadurch gekennzeichnet, dass** die einzelnen Körpersegmente (11) und die einzelnen Schaumstoffkörper (7), in der Draufsicht auf das flächenförmige Strukturelement (10), eine polygonale Form, zweckmässig eine acht-, sechs-, oder dreieckige Form, vorzugsweise eine viereckige Form und insbesondere eine rechteckige oder quadratische Form aufweisen.

13. Verfahren zur Herstellung eines flächenförmigen Strukturelementes (10), enthaltend eine Mehrzahl von gestapelten und/oder in einer Ebene nebeneinander angeordneten und miteinander verbundenen Körpersegmenten (11) aus einem geschäumten thermoplastischen Kunststoff, wobei das Strukturelement (10) vollständig aus thermoplastischem Kunststoff ist und die Körpersegmente (11) an ihren anstossenden Flächen unter Ausbildung flächiger Schweissnähte (32, 33) gegenseitig verschweisst sind, nach Anspruch 1, ausgeführt durch die folgenden Schritte:
a. Herstellung von geschlossenzelligen Schaumstoffkörpern (7) durch einen Extrusions- und Schäumprozess oder Herstellung von Körpersegmenten (11) durch einen Extrusions- und Schäumprozess, danach durch längsseitiges Zusammenschweissen der Körpersegmente (11) durch flächiges Anschmelzen der zu verbindenden Seitenflächen der Körpersegmente (11) und nachfolgendes Zusammenfügen und Wiedererhärten zu Schaumstoffkörpern (7) unter Ausbildung flächiger Schweissnähte (32), wobei die flächigen Schweissnähte (32) als porenarme oder porenfreie Kunststoffzwischenschichten vorliegen;
b. längsseitiges Zusammenschweissen der Schaumstoffkörper (7) durch flächiges Anschmelzen der zu verbindenden Seitenflächen der Schaumstoffkörper (7) und nachfolgendes Zusammenfügen und Wiedererhärten zu einem Schaumstoffblock (5) unter Ausbildung flächiger Schweissnähte (33), wobei die flächigen Schweissnähte (33) als porenarme oder porenfreie Kunststoffzwischenschichten vorliegen;
c. Aufteilung des Schaumstoffblockes (5) in einzelne flächenförmige Strukturelemente (30), insbesondere Schaumstoffplatten, quer zur Längsrichtung der Schaumstoffkörper (7),
wobei die flächigen Schweissnähte (32, 33) in Draufsicht des flächenförmigen Strukturelementes (30) eine versteifend wirkende Stegstruktur ausbilden,
**dadurch gekennzeichnet, dass**
das Anschmelzen der Längsseiten (43, 44) der Schaumstoffkörper (7) mittels eines Heizschwertes (40) mit strukturierter Oberflache unter Erzeugung von nutenförmigen Vertiefungen im Schaumstoffkörper (7) erfolgt oder dass das Anschmelzen von ein- oder beidseitig mit nutenförmigen Vertiefungen strukturierten Schaumstoffkörpern (7) mittels eines Heizschwertes (40) mit unstrukturierter Oberflache erfolgt oder dass das Anschmelzen von unstrukturierten Schaumstoffkörpern (7) zuerst mittels eines Heizschwertes (40) mit unstrukturierter Oberflache und danach mittels einer Struktur verleihenden Matrize erfolgt und dass in einem weiteren Schritt die angeschmolzenen Längsseiten (43, 44) der Schaumstoffkörper (7) unter Ausbildung von Ausnehmungen (45) in der Schweissnaht (33) zusammengefügt werden.

14. Verfahren zur Herstellung eines flächenförmigen Strukturelementes (10) nach Anspruch 13, **dadurch gekennzeichnet, dass** das Anschmelzen der Längsseiten (43, 44) der Schaumstoffkörper (7) mittels eines Heizschwertes (40) mit ein- oder beidseitig strukturierter Oberflache unter Erzeugung von nutenförmigen Vertiefungen im Schaumstoffkörper (7) erfolgt.

15. Verfahren zur Herstellung eines flächenförmigen Strukturelementes (10) nach Anspruch 14, **dadurch gekennzeichnet, dass** an einem Heizschwert (40), insbesondere eine Platte mit zwei beheizten Seitenflächen (41,42) darstellend, jeweils die sich in Extrusionsrichtung erstreckenden gegenüberliegenden Oberflächen der Längsseiten (43, 44) zweier Schaumstoffkörper (7, 7') soweit erhitzt werden, bis die Oberflächen der Längsseiten (43, 44) der Schaumstoffkörper (7, 7') erweichen oder anschmelzen und die an der Oberfläche befindlichen Zellen kollabieren und eine dünne Haut aus Schmelzmasse bilden und eine oder beide Seitenflächen (41) des Heizschwertes (40) eine Struktur (46, 47, 48) aufweisen und die Struktur (46, 47, 48) sich matrizenartig in den thermoplastischen Kunststoff einprägt, danach die Schaumstoffkörper (7, 7') vom Heizschwert (40) auf Distanz gebracht werden und das Heizschwert (40) entfernt wird und die beiden erhitzten Oberflächen der Längsseiten (43, 44) der Schaumstoffkörper (7, 7') in erhitztem Zustand in gegenseitige Berührung, zweckmässig unter Druckbeaufschlagung, gebracht werden, wobei die sich berührenden Oberflächen der Längsseiten (43, 44) miteinander verschweissen und unter Abkühlung der thermoplastische Kunststoff erhärtet.

16. Verfahren zur Herstellung eines flächenförmigen Strukturelementes (10) nach Anspruch 15, **dadurch gekennzeichnet, dass** die an einer oder beider Oberflächen (41) des Heizschwertes (40) vorhandene Struktur aus einer Mehrzahl von parallel in Abstand angeordneten Profilstäben (46, 47, 48) gebildet ist, die sich über die ganze Höhe und über die ganze Breite einer oder beider Oberflächen (41) des Heizschwertes (40) erstrecken und vorzugsweise die Profilstäbe (46, 47, 48) sich in gleichen Abständen auf der Oberfläche (41) verteilen.

17. Verfahren zur Herstellung eines flächenförmigen Strukturelementes (10) nach Anspruch 16, **dadurch gekennzeichnet, dass** an einer oder beider Oberflächen (41) des Heizschwertes (40) vorhandene Struktur aus sich kreuzenden Profilstäben ein Fachwerk- oder Waffelmuster oder eine Gitterstruktur gebildet ist und die schräg oder diagonal laufenden Profilstäbe in einem beliebigen Winkel, insbesondere 0° - 90°, bezüglich einer Seitenkante des Heizschwertes laufen und die Profilstäbe insbesondere in einem Winkel von etwa 1° - 60°, zweckmässig von 15° - 60°, insbesondere von 30° - 45° und ganz besonders bevorzugt von 45°, angeordnet sind.

18. Verfahren zur Herstellung eines flächenförmigen Strukturelementes (10) nach Anspruch 13, **dadurch gekennzeichnet, dass** an einem Heizschwert, insbesondere eine Platte mit zwei beheizten unstrukturierten, glattflächigen Seitenflächen (42) darstellend, die gegenüberliegenden Längsseiten (43, 44) zweier Schaumstoffkörper (7), wobei eine oder beide der Längsseiten (43, 44) der Schaumstoffkörper (7) mit Nuten, Rillen oder Einfräsungen strukturiert sind, soweit erhitzt wird, dass die Oberflächen der Schaumstoffkörper (7) aus thermoplastischem Kunststoff erweicht oder anschmilzt und danach das Heizschwert (40) entfernt und die beiden strukturierten erhitzten Oberflächen (43, 44) der Schaumstoffkörper (7) in gegenseitige Berührung, zweckmässig unter Druckbeaufschlagung, gebracht werden, wobei unter Abkühlung der Kunststoff erhärtet.

19. Verfahren zur Herstellung eines flächenförmigen Strukturelementes (10) nach Anspruch 13, **dadurch gekennzeichnet, dass** an einem Heizschwert (40), eine Platte mit zwei beheizten unstrukturierten, glattflächigen Seitenflächen (42) darstellend, die gegenüberliegenden Längsseiten (43, 44) zweier Schaumstoffkörper (7, 7'), soweit erhitzt werden, dass die erhitzten Oberflächen der Schaumstoffkörper (7) aus thermoplastischem Kunststoff erweichen oder anschmelzen und das Heizschwert (40) daraufhin entfernt und eine kammartige Matrize zwischen die beiden erhitzten Oberflächen der Schaumstoffkörper (7) eingeführt und die Matrize und die Schaumstoffkörper (7), zweckmässig unter Druckbeaufschlagung, in gegenseitige Berührung gebracht werden, wobei der Kunststoff verschweisst und unter Abkühlung erhärtet und die Matrize danach aus der Schmelz- oder Erweichungszone der beiden Schaumstoffkörper ausgeleitet wird.

20. Verwendung des flächenförmigen Strukturelementes (10) nach einem der Ansprüche 1 bis 12 in einem Strukturbauteil (1) mit einer wenigstens auf einer Oberfläche des flächenförmigen Strukturelementes (10) aufgebrachten Deckschicht (2).

21. Verwendung des flächenförmigen Strukturelementes (10) nach Anspruch 20 als Kern oder Kernschicht in einem Strukturbauteil (1), wobei das Strukturbauteil (1) ein Sandwich-Verbundelement, insbesondere eine Sandwich-Verbundplatte, mit beidseitig des Kerns oder der Kernschicht angeordneten Deckschichten (2, 3) oder ein Verbundbauteil aus Kern oder Kernschicht und Deckschichten ist.

22. Verwendung des Sandwich-Verbundelementes (1) nach Ansprüchen 20 oder 21 als Kern oder Kernschicht in Verbundbauteilen, insbesondere in Windflügeln von Windkraftanlagen.

## Claims

1. Sheet-like structural element (10), as a portion of a foam block (5), the foam block (5) consisting of a foamed plastics material and containing a plurality of stacked foam bodies (7), in particular foam bodies made of body segments (11) which are arranged side by side in a plane, are interconnected to form the foam bodies (7) and comprise planar weld seams (13) on their abutting faces, and the abutting faces of the foam bodies (7) being welded to one another to form the foam block (6), planar weld seams (12) being formed, **characterised In that** the weld seams are interrupted by recesses which are spaced apart from one another.

2. Sheet-like structural element according to claim 1, **characterised i**n that the weld seams (12) between the foam bodies (7) are interrupted by recesses (45) which are spaced apart from one another.

3. Sheet-like structural element according to either claim 1 or claim 2, **characterised in that** the planar weld seams (12) form a low-porosity or non-porous plastics material Intermediate layer in the form of a web structure having a reinforcing effect in plan view and the recesses (45) have low-porosity or non-porous walls.

4. Sheet-like structural element according to any one of claims 1 to 3, **characterised in that** the weld seams (13) of the body segments (11), the weld seams (12) of the foam bodies (7) and the walls of the recesses (45) are made of the melted and re-hardened thermoplastic polymer.

5. Sheet-like structural element according to any one of claims 1 to 4, **characterised in that** the thickness of the weld seams (12, 13) and/or the wall thickness of the recesses (45) is set in such a way that the reticular web structure of the weld seams and/or the walls of the recesses (45) Improves the strength of the structural element (10).

6. Sheet-like structural element according to any one of claims 1 to 5, **characterised in that** the foam bodies (7) or the body segments (11) are produced by extrusion, and the weld seam faces (32, 33) and the recesses (45) lie in the extrusion direction of the foam bodies (7).

7. Sheet-like structural element according to any one of claims 1 to 6, **characterised in that** the foam bodies (7) or the body segments (11) are produced by extrusion, and the weld seam faces (32, 33) Ile In the extrusion direction of the foam bodies (7) and the recesses are arranged at an angle greater than or equal to 0°, expediently 0 to 90°, particularly expediency 1° - 60°, advantageously 15° - 60°, in particular 30° - 45° and most preferably 45°, to an axis parallel to the longitudinal face of the foam bodies and extending in the extrusion direction.

8. Sheet-like structural element according to any one of claims 1 to 7, **characterised in that** the sheet-like structural element (10) has facings (16) on the two sides thereof and has at least 200, expediently at least 400, and up to 60,000, preferably up to 40,000 recesses (45) per square metre of facing (16).

9. Sheet-like structural element according to any one of claims 1 to 8, **characterised in that** the recesses (46) have a diameter or average diameter or an edge length of 0.2 to 10 mm, expediently 1 to 5 mm and preferably 2 to 3 mm.

10. Sheet-like structural element according to any one of claims 1 to 9, **characterised in that** the mutual spacing between the recesses (46) within the respective weld seam (23, 33) is 2 to 100 mm.

11. Sheet-like structural element according to any one of claims 1 to 10, **characterised in that** the spacing between the recesses (45) within the respective weld seam (23, 33) is 2 to 20 times, In particular 5 to 10 times the diameter, the average diameter or the greatest edge length or the recess (45).

12. Sheet-like structural element according to any one of claims 1 to 11, **characterised in that**, In a plan view of the sheet-like structural element (10), the individual body segments (11) and the individual foam bodies (7) have a polygonal shape, expediently an octagonal, hexagonal or triangular shape, preferably a quadrilateral shape and in particular a rectangular or square shape.

13. Method for producing a sheet-like structural element (10), containing a plurality of body segments (11) which are made of a foamed thermoplastic polymer, stacked and/or arranged side by side in a plane and interconnected, the structural element (10) being made entirely of thermoplastic polymer and the abutting faces of the body segments (11) being welded to one another, planar weld seams (32, 33) being formed, according to claim 1, carded out by the following steps:
a. producing closed-cell foam bodies (7) by an extrusion and foaming process or producing body segments (11) by an extrusion and foaming process, then welding the body segments (11) together longitudinally by partially melting the side faces to be connected of the body segments (11) In a planar manner, and subsequent joining and re-hardening to form foam bodies (7), planar weld seams (32) being formed, the planar weld seams (32) being in the form of low-porosity or non-porous plastic material intermediate layers;
b. welding the foam bodies (7) together longitudinally by partially melting the side faces to be connected of the foam bodies (7) In a planar manner and subsequent joining and re-hardening to form a foam block (5), planar weld seams (33) being formed, the planar weld seams (33) being in the form of low-porosity or non-porous plastic material intermediate layers;
c. dividing the foam block (5) Into individual sheet-like structural elements (30), in particular
foam plates, transversely to the longitudinal direction of the foam bodies (7),
the planar weld seams (32, 33), in a plan view of the sheet-like structural element (30), forming a web structure which has a reinforcing effect, **characterised in that** the longitudinal faces (43, 44) of the foam bodies (7) are partially melted by means of a heating blade (40) having a structured surface, groove-shaped indentations being produced in the foam body (7), or **in that** foam bodies (7) which are structured with groove-shaped indentations on one or both sides are partially melted by means of a heating blade (40) having an unstructured surface or **In that** unstructured foam bodies (7) are firstly partially melted by means of a heating blade (40) having an unstructured surface and then by means of a structuring matrix and **in that**, in a further step, the partially melted longitudinal faces (43, 44) of the foam bodies (7) are joined together, recesses (45) being formed In the weld seam (33).

14. Method for producing a sheet-like structural element (10) according to claim 13, **characterised in that** the longitudinal faces (43, 44) of the foam bodies (7) are partially melted by means of a heating blade (40) having a structured surface on one or both sides, groove-shaped indentations being formed in the foam body (7).

15. Method for producing a sheet-like structural element (10) according to claim 14, **characterised i**n that each of the opposing surfaces, extending in the extrusion direction, of the longitudinal faces (43, 44) of two foam bodies (7, 7') are heated on a heating blade (40), in particular in the form of a plate having two heated side faces (41, 42), until the surfaces of the longitudinal faces (43, 44) of the foam bodies (7, 7') soften or partially melt and the cells located on the surface collapse and form a thin hot-melt-compound skin and one or both side faces (41) of the heating blade (40) have a structure (46,47, 48) and the structure (46, 47, 48) makes an Imprint in the thermoplastic polymer In the manner of a matrix, the foam bodies (7, 7') are subsequently spaced from the heating blade (40) and the heating blade (40) Is removed and the two heated surfaces of the longitudinal faces (43, 44) of the foam bodies (7, 7') are brought Into mutual contact In the heated state, expedlently under pressure, the contacting surfaces of the longitudinal faces (43, 44) welding to one another and the thermoplastic polymer hardening as It cools.

16. Method for producing a sheet-like structural element (10) according to claim 15, **characterised i**n that the structure present on one or both surfaces (41) of the heating blade (40) is formed of a plurality of profile bars (46, 47, 48) which are arranged In parallel and with spacing and extend over the entire height and the entire width of one or both surfaces (41) of the heating blade (40) and the profile bars (46, 47, 48) are preferably distributed over the surface (41) with equal spacing.

17. Method for producing a sheet-like structural element (10) according to claim 16, **characterised in that** a lattice or honeycomb pattern or a grid structure is formed on one or both surfaces (41) of the structure present on the heating blade (40), which structure is formed of intersecting profile bars, and the obliquely or diagonally extending profile bars extend at any desired angle, in particular 0° - 90°, to a side edge of the heating blade and the profile bars are arranged at an angle of approximately 1° - 60°, expediently 16° - 60°, In particular 30° - 45° and most preferably 45°.

18. Method for producing a sheet-like structural element (10) according to claim 13, **characterised i**n that the opposing longitudinal faces (43, 44) of two foam bodies (7), one or both of the longitudinal faces (43, 44) of the foam bodies (7) being structured with grooves, slots or milled notches, are heated on a heating blade, in particular in the form of a plate having two heated, unstructured, smooth side faces (42), until the surfaces of the foam bodies (7) made of thermoplastic polymer soften or partially melt and the heating blade (40) is then removed and the two heated structured surfaces (43, 44) of the foam bodies (7) are brought into mutual contact, expediently under pressure, the plastics material hardening as it cools.

19. Method for producing a sheet-like structural element (10) according to claim 13, **characterised in that** the opposing longitudinal faces (43, 44) of two foam bodies (7, 7') are heated on a heating blade (40), in the form of a plate having two heated, unstructured, smooth side faces (42), until the heated surfaces of the foam bodies (7) made of thermoplastic polymer soften or partially melt and the heating blade (40) is then removed and a comb-like matrix is inserted between the two heated surfaces of the foam bodies (7) and the matrix and the foam bodies (7) are brought into mutual contact, expediently under pressure, the plastics material partially melting and hardening as it cools and the matrix then being removed from the melting or softening zone of the two foam bodies.

20. Use of the sheet-like structural element (10) according to any one of claims 1 to 12 In a structural component (1) having a facing (2) applied at least to one surface of the sheet-like structural element (10).

21. Use of the sheet-like structural element (10) according to claim 20 as a core or core layer in a structural component (1), wherein the structural component (1) is a sandwich composite element, in particular a sandwich composite panel, having facings (2, 3) arranged on the two sides of the core or the core layer or a composite component made of a core or core layer and facings.

22. Use of the sandwich composite element (1) according to either claim 20 or claim 21 as a core or core layer in composite components, in particular in air vanes of wind turbines.

## Revendications

1. Elément de structure planiforme (10) comme section d'un bloc de mousse (5), dans lequel le bloc de mousse (5) est constitué d'une matière synthétique expansée et contient de multiples corps de mousse empilés (7), en particulier des corps de mousse (7) constitués de segments de corps disposés les uns à côté des autres dans un plan et liés les uns aux autres en les corps de mousse (7), lesquels présentent sur leurs surfaces adjacentes des soudures planes (13), et dans lequel les corps de mousse (7) sont soudés mutuellement sur leurs surfaces adjacentes avec la formation de soudures planes (12) en le bloc de mousse (5),
**caractérisé en ce que**
les soudures sont interrompues par des creux espacés les uns des autres.

2. Elément de structure planiforme selon la revendication 1, **caractérisé en ce que** les soudures (12) entre les corps de mousse (7) sont interrompus par des creux (45) espacés les uns des autres.

3. Elément de structure planiforme selon la revendication 1 ou 2, **caractérisé en ce que** les soudures planes (12) forment une couche intermédiaire de matière synthétique pauvre en pores ou exempte de pores dans la forme d'une structure nervurée ayant une action de renforcement dans une vue de dessus et les creux (45) présentent des parois pauvres en pores ou exemptes de pores.

4. Elément de structure planiforme selon l'une quelconque des revendications 1 à 3, **caractérisé en ce que** les soudures (13) des segments de corps (11), les soudures (12) des corps de mousse (7) et les parois des creux (45) sont formées de la matière synthétique thermoplastique fondue et redurcie.

5. Elément de structure planiforme selon l'une quelconque des revendications 1 à 4, **caractérisé en ce que** l'épaisseur des soudures (12, 13) et/ou l'épaisseur de paroi des creux (45) est déterminée de telle sorte que la structure nervurée réticulée des soudures et/ou les parois des creux (45) améliorent la solidité de l'élément de structure (10).

6. Elément de structure planiforme selon l'une quelconque des revendications 1 à 5, **caractérisé en ce que** les corps de mousse (7) ou les segments de corps (11) sont préparés par extrusion et les surfaces de soudure (32, 33) ainsi que les creux (45) sont dans la direction d'extrusion des corps de mousse (7).

7. Elément de structure planiforme selon l'une quelconque des revendications 1 à 6, **caractérisé en ce que** les corps de mousse (7) ou les segments de corps (11) sont préparés par extrusion, et les surfaces de soudure (32, 33) sont dans la direction d'extrusion des corps de mousse (7) et les creux sont disposés sous un angle de 0° ou supérieur, de manière appropriée de 0 à 90°, encore mieux de 1°-60°, avantageusement de 15°-60°, particulièrement de 30°-45° et bien mieux encore de 45° par rapport à un axe parallèle au côté longitudinal du corps de mousse et en continu dans la direction d'extrusion.

8. Elément de structure planiforme selon l'une quelconque des revendications 1 à 7, **caractérisé en ce que** l'élément de structure planiforme (10) présente des surfaces de couverture (16) sur les deux côtés et la surface de couverture (16) présente par mètre carré au moins 200, de manière appropriée au moins 400, et jusqu'à 60 000, de préférence jusqu'à 40 000 creux (45).

9. Elément de structure planiforme selon l'une quelconque des revendications 1 à 8, **caractérisé en ce que** les creux (45) présentent un diamètre ou un diamètre moyen ou une longueur d'arête de 0,2 à 10 mm, de manière appropriée de 1 à 5 mm et de préférence de 2 à 3 mm.

10. Elément de structure planiforme selon l'une quelconque des revendications 1 à 9, **caractérisé en ce que** la distance mutuelle entre les creux (45) dans la soudure correspondante (23, 33) est de 2 à 100 mm.

11. Elément de structure planiforme selon l'une quelconque des revendications 1 à 10, **caractérisé en ce que** la distance entre les creux (45) dans la soudure correspondante (23, 33) est de 2 à 20 fois, en particulier de 5 à 10 fois le diamètre, le diamètre moyen ou la longueur d'arête la plus importante du creux (45).

12. Elément de structure planiforme selon l'une quelconque des revendications 1 à 11, **caractérisé en ce que** les segments de corps (11) individuels et les corps de mousse (7) individuels présentent dans la vue de dessus sur l'élément de structure planiforme (10) une forme polygonale, de manière appropriée une forme octogonale, hexagonale ou triangulaire, de préférence une forme quadrangulaire et en particulier une forme à angle droit ou une forme quadratique.

13. Procédé pour la préparation d'un élément de structure planiforme (10) contenant de multiples segments de corps (11) empilés et/ou disposés les uns à côté des autres dans un plan et liés les uns aux autres, constitués d'une matière synthétique thermoplastique expansée, dans lequel l'élément de structure (10) est entièrement constitué d'une matière synthétique thermoplastique et les segments de corps (11) sont soudés mutuellement sur leurs surfaces adjacentes avec la formation de soudures planes (32, 33), selon la revendication 1, réalisé par les étapes suivantes :
a. préparation de corps de mousse (7) à alvéoles fermées par un procédé d'extrusion et d'expansion ou préparation de segments de corps (11) par un procédé d'extrusion et d'expansion suivi par un soudage sur le côté longitudinal des segments de corps (11) par fusion en surface des surfaces latérales des segments de corps (11) à lier et par assemblage subséquent et redurcissement en corps de mousse (7) avec la formation de soudures planes (32), dans laquelle les soudures planes (32) sont présentes dans la forme de couches intermédiaires de matière synthétique pauvres en pores ou exemptes de pores ;
b. soudage sur le côté longitudinal des corps de mousse (7) par fusion en surface des surfaces latérales des corps de mousse (7) à lier et par assemblage subséquent et redurcissement en un bloc de mousse (5) avec la formation de soudures planes (33), dans lequel les soudures planes (33) sont présentes dans la forme de couches Intermédiaires de matière synthétique pauvres en pores ou exemptes de pores ;
c. répartition du bloc de mousse (5) en des éléments de structure planiformes individuels (30), en particulier des plaques de mousse, perpendiculairement à la direction longitudinale du corps de mousse (7),
les soudures planes (32, 33) formant dans une vue de dessus de l'élément de structure planiforme (30) une structure nervurée ayant une action de renforcement,
**caractérisé en ce que**
la fusion des côtés longitudinaux (43, 44) du corps de mousse (7) est réalisée à l'aide d'une semelle chauffante (40) ayant une surface structurée produisant des empreintes en forme de rainures dans le corps de mousse (7) ou **en ce que** la fusion des corps de mousse (7) structurés sur un côté ou les deux côtés avec des creux en forme de rainures est réalisée à l'aide d'une semelle chauffante (40) ayant une surface non structurée et **en ce que** la fusion des corps de mousse (7) non structurés est tout d'abord réalisée à l'aide d'une semelle chauffante (40) ayant une surface non structurée et ensuite à l'aide d'une matrice communiquant une structure et **en ce que** les côtés longitudinaux fondus (43, 44) du corps de mouse (7) sont rassemblés dans une autre étape avec la formation de creux (45) dans la soudure (33).

14. Procédé pour la préparation d'un élément de structure planiforme (10) selon la revendication 13, **caractérisé en ce que** la fusion des côtés longitudinaux (43, 44) du corps de mousse (7) est réalisé à l'aide d'une semelle chauffante (40) ayant une surface structurée sur un côté ou sur les deux côtés avec la production de creux en forme de rainures dans le corps de mousse (7).

15. Procédé pour la préparation d'un élément de structure planiforme (10) selon la revendication 14, **caractérisé en ce que** l'on chauffe sur une semelle chauffage (40) représentant en particulier une plaque avec deux surfaces latérales chauffées (41, 42) à chaque fois les surfaces des côtés longitudinaux (43, 44) de deux corps de mousse (7, 7') opposées dans la direction de l'extrusion jusqu'à ce que les surfaces des côtés longitudinaux (43, 44) des corps de mousse (7, 7') ramollissent ou fondent et les alvéoles se trouvant sur la surface collaborent et forment une mince peau constituée de la masse en fusion et une ou les deux surfaces latérales (41) de la semelle chauffante (40) présentent une structure (46, 47, 48) et la structure (46, 47, 48) se grave dans la forme d'une matrice dans la matière synthétique thermoplastique, après quoi les corps de mouse (7, 7') sont éloignés de la semelle chauffante (40) et la semelle chauffante (40) est retirée et les deux surfaces chauffées des côtés longitudinaux (43, 44) des corps de mousse (7, 7') sont mis à l'état chauffé en contact mutuel, de manière appropriée sous pression, dans lequel les surfaces des côtés longitudinaux (43, 44) en contact sont soudées ensemble et la matière synthétique thermoplastique durcit en refroidissant.

16. Procédé pour la préparation d'un élément de structure planiforme (10) selon la revendication 15, **caractérisé en ce qu'**il est formé une structure présente sur un ou sur les deux côtés (41) de la semelle chauffante (40), constituée de multiples profils (46, 47, 48) espacés parallèlement, lesquels profils s'étendent sur la hauteur totale et sur la largeur totale d'une ou des deux surfaces (41) de la semelle chauffante (40) et les profils (46, 47, 48) sont de préférence répartis de manière équidistante sur la surface (41).

17. Procédé pour la préparation d'un élément de structure planiforme (10) selon la revendication 16, **caractérisé en ce qu'**il est formé une structure présente sur une ou les deux surfaces (41) de la semelle chauffante (40), constituée de profils qui se croisent d'un modèle de treillis ou de gaufrier ou une structure de grille et les profils s'étendent en continu de manière inclinée ou en diagonale sous un angle quelconque, en particulier 0°-90°, par rapport à une arête latérale de la semelle chauffante et les profils sont en particulier disposés sous un angle d'environ 1°-60°, de manière appropriée de 15°-60°, en particulier de 30°-45° et encore mieux de 45°.

18. Procédé pour la préparation d'un élément de structure planiforme (10) selon la revendication 13, **caractérisé en ce que** l'on chauffe sur une semelle chauffante représentant en particulier une plaque avec deux surfaces latérales à surface lisse, non structurées chauffées (42) les côtés longitudinaux opposés (43, 44) de deux corps de mousse (7), un côté longitudinal ou les deux côtés longitudinaux (43, 44) du corps de mousse (7) étant structurés avec des rainures, des cannelures ou des fraisages, jusqu'à ce que les surfaces des corps de mousse (7) constituées d'une matière synthétique thermoplastique ramollissent ou fondent et la semelle chauffante (40) est ensuite éloignée et les deux surfaces chauffées structurées (43, 44) des corps de mousse (7) sont mises en contact mutuel, de manière appropriée sous pression, dans lequel la matière synthétique durcit en refroidissant.

19. Procédé pour la préparation d'un élément de structure planiforme (10) selon la revendication 13, **caractérisé en ce que** l'on chauffe sur une semelle chauffante (40) représentant une plaque avec deux surfaces latérales à surface lisse, non structurées chauffées (42) les côtés longitudinaux opposés (43, 44) de deux corps de mousse (7, 7') jusqu'à ce que les surfaces chauffées des corps de mousse (7) constituées d'une matière synthétique thermoplastique ramollissent ou fondent et on éloigne après cela la semelle chauffante (40) et on introduit une matrice de type peigne entre les deux surfaces chauffées du corps de mousse (7) et on met la matrice et le corps de mousse (7) en contact mutuel, de manière appropriée sous pression, dans lequel la matière synthétique est soudée et durcit en refroidissant et la matrice est après cela évacuée de la zone de fusion ou de ramollissement des deux corps de mousse.

20. Utilisation de l'élément de structure planiforme (10) selon l'une quelconque des revendications 1 à 12 dans un élément de structure de construction (1) avec une couche de couverture (2) appliquée au moins sur une surface de l'élément de structure planiforme (10).

21. Utilisation de l'élément de structure planiforme (10) selon la revendication 20 comme noyau ou couche de noyau dans un élément de structure de construction (1), dans laquelle l'élément de structure de construction (1) est un élément composite-sandwich, en particulier une plaque composite-sandwich avec sur les deux côtés du noyau ou de la couche de noyau des couches de couverture disposées (2, 3) ou un élément de construction composite constitué d'un noyau ou d'une couche de noyau et de couches de couverture.

22. Utilisation de l'élément composite-sandwich (1) selon les revendications 20 ou 21 comme noyau ou couche de noyau dans des éléments de construction composites, en particulier dans des volants à ailettes d'installations d'éoliennes.
